# EUROPÄISCHE PATENTSCHRIFT

(11) **EP 4 137 262 B1**
(45) Veröffentlichungstag und Bekanntmachung des Hinweises auf die Patenterteilung: **08.05.2024**
(21) Anmeldenummer: 21192431.1
(22) Anmeldetag: 20.08.2021
(51) Int. Cl.: B23K 26/03, B23K 26/067, B23K 26/38, B23K 26/70

(54) **VERFAHREN UND VORRICHTUNG ZUM LASERSCHNEIDEN EINES WERKSTÜCKS**
DEVICE FOR AND METHOD OF LASER CUTTING A WORKPIECE
PROCÉDÉ ET DISPOSITIF DE DÉCOUPAGE LASER D'UNE PIÈCE

(43) Veröffentlichungstag der Anmeldung: 22.02.2023
(73) Patentinhaber: Bystronic Laser AG, 3362 Niederönz (CH)
(72) Erfinder: LUEDI, Andreas, 3400 Burgdorf (CH); HERWIG, Patrick, 01237 Dresden (DE)
(74) Vertreter: Patentanwälte Geyer, Fehners & Partner mbB

(56) Entgegenhaltungen:
- EP-A1- 3 249 348
- DE-A1-102018 129 416
- US-A1- 2012 320 380

## Beschreibung

Die Erfindung betrifft ein Verfahren zum Laserschneiden eines Werkstücks, eine Vorrichtung zum Laserschneiden eines Werkstücks, sowie ein Computerprogrammprodukt.

Für die Laserbearbeitung von Werkstücken, insbesondere für Verfahren zum thermischen Trennen von Werkstoffen mittels Laserstrahlung, wie Laserschneiden, werden Laserbearbeitungsvorrichtungen eingesetzt. In vielen Fällen wird ein Laserbearbeitungskopf genutzt, mit dem der Bearbeitungslaserstrahl auf das Werkstück gerichtet wird, beispielsweise auf ein zu bearbeitendes Blech.

Hochfrequentes Strahloszillieren gehört zu den Technologien der dynamischen Strahlformung (DBS Dynamic Beam Shaping). Dabei wird der Laserstrahl, im Falle eines fokussierten Laserstrahls sein Fokalpunkt, mit Frequenzen von z.B. 100 Hz bis 100 kHz insbesondere senkrecht zur Ausbreitungsrichtung des Laserstrahls bewegt. Die Oszillation des Laserstrahls erfolgt daher mit Frequenzen, die deutlich höher sind, als die typische Reaktionszeit zwischen Laserstrahl und Material des Werkstücks. Auf diese Weise können mit einem in einen Laserbearbeitungskopf integrierten DBS-System nahezu beliebige Intensitätsverteilungen des Laserstrahls erzeugt werden. Auch das Strahlparameterprodukt des Laserstrahls kann für das Laserschneiden wie gewünscht gestaltet werden. Mit durch ein DBS-System angepassten Laserstrahlen können bessere Schneidergebnisse erzielt werden, siehe z.B. Goppold et al.: Chancen und Herausforderungen der dynamischen Strahlformung, Deutscher Schneidkongress, 2018; Goppold et al.: Dynamic Beam Shaping Improves Laser Cutting of Thick Steel Plates, Industrial Photonics, 2017; Goppold et al.: Laserschmelzschneiden mit dynamischer Strahlformung, Fraunhofer IWS Jahresbericht, 2015; Mahrle et al.: theoretical aspects of fibre laser cutting, Journal of Physics D Applied Physics, 2009; https://www.iws.fraunhofer.de/en/pressandmedia/press_releases/2016/press_release_2016-15.html; "Understanding the Changed Mechanisms of Laser Beam Fusion Cutting by Applying Beam Oscillation, Based on Thermographie Analysis", Thomas Pinder * and Cindy Goppold, Appl. Sci. 2021, 11, 921. https://doi.org/10.3390/app11030921. Das Fraunhofer IWS Dresden hat gezeigt, dass als Dynamic Beam Shaping (DBS)-System ein Tip-/Tilt-Piezoscanner System besonders geeignet scheint (C. Goppold et al., «Tip-Tilt piezo platform scanner qualifies dynamic beam shaping for high laser power in cutting applications», LIM Konferenz, München Juni 2019). Dabei wurde ein ca. 1 Zoll grosser Spiegel an einen Piezoantrieb als Aktuator gekoppelt, welcher den Spiegel hochdynamisch bewegt.

Ein Laser kann auch für eine Distanzmessung eingesetzt werden, vgl. DE102018118501 A1, DE102018119703A1, DE102018129416A1 (offenbarend alle Schritte und Merkmale des Oberbegriffes der Ansprüche 1 und 8).

Die DE102014007887 A1 betrifft eine Messvorrichtung zum Erfassen von Grenzflächen und/oder Oberflächendaten eines durch eine Laserbearbeitungsvorrichtung zu bearbeitenden Werkstücks. EP3249348 A1 betrifft eine Sensorvorrichtung zur Vermessung einer Oberfläche, mit: einer Beleuchtungseinrichtung zum Aussenden eines Lichtstrahls und einer Optikeinrichtung, welche ausgebildet ist, den Lichtstrahl in einen ersten Teillichtstrahl und einen zweiten Teillichtstrahl aufzuteilen. Die Optikeinrichtung ist ausgebildet, den ersten Teillichtstrahl in Richtung eines ersten Oberflächenbereichs der Oberfläche auszusenden, und den zweiten Teillichtstrahl in Richtung eines zweiten Oberflächenbereichs der Oberfläche auszusenden. Ein Lichtsensor ist vorgesehen, welcher ausgebildet ist, eine Reflexion des ersten Teillichtstrahls an dem ersten Oberflächenbereich und eine Reflexion des zweiten Teillichtstrahls an dem zweiten Oberflächenbereich zu empfangen.

In den letzten Jahren wurde die Überwachung von Laserbearbeitungsprozessen, insbesondere von Schneidprozessen, wichtiger. Heutige Laserbearbeitungsmaschinen sind oft mit Fotodioden und teilweise mit Kameras ausgerüstet, welche eine Echtzeitüberwachung des Bearbeitungsprozesses als Punkt- oder 2D-Flächeninformation ermöglichen. Für moderne Laserschneidmaschinen wird vermehrt eine umfassende Prozess-Sensorik eingesetzt, womit Schneidabriss und Qualitätseinbussen gut erkannt werden können, z.B. raue Schnittkanten, Gratanhaftung und Schlackenbildung an den geschnittenen Werkstückteilen. Qualitätseinbussen treten jedoch nicht über die ganze Dicke des geschnittenen Werkstücks, sondern in einzelnen Ebenen auf, wie z.B. Grat an der Unterseite des geschnittenen Werkstücks.

Einige Schneidmaschinen ermöglichen die Beobachtung des Schneidprozesses mit einer Fotodiode, die z.B. in einem Schneidkopf vorgesehen ist. Dies entspricht einer Punktinformation, wobei über den beobachteten Ort räumlich integriert wird. Mit eine solchen Überwachung kann allerdings nur ein übermässiges Aufglühen oder ein Plasmaschnitt erkannt werden. Es sind auch Schneidprozessbeobachtungen bekannt, in welchen Kameras eingesetzt werden. Mithilfe einer Kamera kann ein zwei-dimensionales Abbild des Prozesses gemacht werden, womit im Vergleich zur Fotodiode schon einiges mehr über den Bearbeitungsprozess ausgesagt werden kann. Entsprechend kann die Schneidperformance überwacht und optimiert werden. Charakteristisch für die Schneidqualität sind der erzeugte Schnittspalt, z.B. eine an dessen Schnittkante erkennbare Riefenbildung, und die erzeugte Schnittfront. Es besteht daher weiterhin ein Bedarf, die Schnittfront und die Entstehung des Schnittspalts zu beobachten, wodurch auf den Schneidzustand geschlossen werden kann.

Aufgabe der Erfindung ist es, ein Verfahren und eine Vorrichtung zum Laserschneiden eines Werkstücks bereitzustellen, welche eine aussagekräftige Beobachtung des Schneidprozesses und der Schneidqualität ermöglichen.

Diese Aufgabe wird gelöst durch ein Verfahren zum Laserschneiden eines Werkstücks nach Anspruch 1, eine Vorrichtung zum Laserschneiden eines Werkstücks nach Anspruch 8, sowie ein Computerprogrammprodukt nach Anspruch 17.

Eine erste Ausführungsform der Erfindung betrifft ein Verfahren zum Laserschneiden eines Werkstücks, siehe Anspruch 1, wobei insbesondere eine Vorrichtung zum Laserschneiden mit einem Schneidkopf eingesetzt wird, mit den Schritten: Bestrahlen einer Prozesszone des Werkstücks mit einem Bearbeitungslaserstrahl, Schneiden des Werkstücks in einer Schneidrichtung und Erzeugen eines Schnittspalts; Bestrahlen der Prozesszone mit einem kohärenten Beleuchtungslichtstrahl, insbesondere mit einem Beleuchtungslaserstrahl; und Detektieren mindestens eines Teils des Beleuchtungslichtstrahls, der von der Prozesszone reflektiert wird; wobei der Beleuchtungslichtstrahl in einen ersten Lichtstrahl und einen zweiten Lichtstrahl geteilt wird; der erste Lichtstrahl auf die Prozesszone geleitet wird; der zweite Lichtstrahl auf einen Referenzspiegel geleitet wird; eine Strahlungsintensität einer Überlagerung mindestens eines Teils des von der Prozesszone reflektierten ersten Lichtstrahls und mindestens eines Teils des vom Referenzspiegel reflektierten zweiten Lichtstrahls erfasst wird, und eine Mehrzahl von Wegstrecken, die der reflektierte erste Lichtstrahl von der Prozesszone zurücklegt, anhand der erfassten Strahlungsintensität ermittelt wird. Das Material des Werkstücks kann mindestens ein Metall enthalten.

Durch das Erfassen der Strahlungsintensität der Überlagerung mindestens eines Teils des von der Prozesszone reflektierten ersten Lichtstrahls und mindestens eines Teils des vom Referenzspiegel reflektierten zweiten Lichtstrahls können deren Intensitäten summarisch gemessen und/oder Interferenzen zwischen erstem und zweitem Lichtstrahl detektiert werden. Mit der ermittelten Mehrzahl von Wegstrecken, die der reflektierte erste Lichtstrahl von der Prozesszone zurücklegt, werden Tiefen-Informationen über die Prozesszone, insbesondere Informationen über den Schnittspalt und/oder dessen Schnittfront, z.B. über deren Geometrie erhalten. Das Verfahren ermöglicht, einen Verlauf der Schnittfront über deren Tiefe zu rekonstruieren und als Querschnitt durch deren dreidimensionale Struktur abzubilden. Ferner kann der Verlauf einer Schnittkante und/oder des Schnittspalts über deren Tiefe rekonstruiert werden. Ein derart erhaltener Verlauf kann als Querschnitt durch die drei-dimensionale Struktur des Schnittspalts dargestellt werden. Bei Kombination einer Vielzahl rekonstruierter Verläufe können drei-dimensionale Abbildungen erhalten werden. Es wird so ermöglicht, Schneidabriss und Qualitätseinbussen zu erkennen, z.B. raue Schnittkanten, Gratanhaftung und Schlackenbildung an den geschnittenen Werkstückteilen. Da Tiefen-Informationen über den Schnittspalt und/oder die Schnittfront erhalten werden, können Qualitätseinbussen sogar in einzelnen Ebenen des geschnittenen Werkstücks erkannt werden, wie z.B. Grat an dessen Unterseite. Die Schnittfront und die Entstehung des Schnittspalts können beobachtet werden, wodurch auf den Schneidzustand geschlossen werden kann. Die genannten Rekonstruktionen, Darstellungen und Abbildungen können in Echtzeit während des Laserschneidens, z.B. als Videostream, erhalten werden. Eine stabile und genaue Online-Schneidqualitätsschätzung kann dadurch realisiert werden. Zudem können Informationen über die Geschwindigkeitsverteilung des beim Laserschneiden im Schnittspalt erzeugten Schmelzbades des Werkstückmaterials erhalten werden, z.B. durch Differenzbilder der Schnittspaltgeometrie. Ist die Schnittspaltgeometrie bekannt, insbesondere der Verlauf der Schnittfront, so kann der Schneidzustand gut erkannt und die Schneidperformance optimal geregelt werden. Es können Ursachen für Qualitätseinbußen erkannt und durch Anpassung von Prozessparametern beim Laserschneiden kompensiert werden.

In dem Verfahren entsprechend der Erfindung wird die Mehrzahl von Wegstrecken, die der reflektierte erste Lichtstrahl vor der Prozesszone zurücklegt, durch Minimieren von Phasenverschiebungen zwischen dem von der Prozesszone reflektierten ersten Lichtstrahl und dem vom Referenzspiegel reflektierten zweiten Lichtstrahl ermittelt. Die Mehrzahl von Wegstrecken, die der reflektierte erste Lichtstrahl von der Prozesszone zurücklegt, wird somit durch eine Phasenverschiebungsmessung ermittelt.

In einer weiteren Ausführung kann beim Ermitteln der Mehrzahl von Wegstrecken der Referenzspiegel parallel zur Ausbreitungsrichtung des zweiten Lichtstrahls verschoben werden und/oder die zentrale Wellenlänge des Beleuchtungslichtstrahls kann verändert werden, um maximale konstruktive Interferenzen des von der Prozesszone reflektierten ersten Lichtstrahls und des vom Referenzspiegel reflektierten zweiten Lichtstrahls einzustellen. In einer weiteren Ausführung kann beim Detektieren mindestens ein Element ausgewählt aus einer Querschnittsdarstellung der drei-dimensionalen Prozesszone, insbesondere des Schnittspalts, und eine dreidimensionale Abbildung der Prozesszone, insbesondere des Schnittspalts, erhalten werden. Zudem kann die Strahlungsintensität flächig erfasst werden.

Der Bearbeitungslaserstrahl und der erste Lichtstrahl können mit einer Abweichung von 0° bis 2°, bevorzugt 0,0° bis 0,5°, mehr bevorzugt 0,0° bis 0,1°, koaxial auf die Prozesszone geleitet werden. Beispielweise kann der erste Lichtstrahl bei einem linearen oder flächigen Abtasten der Prozesszone mit einer derartigen Abweichung gegenüber dem Bearbeitungslaserstrahl ausgelenkt werden. Ferner kann beim Detektieren zumindest ein Teil des von der Prozesszone reflektierten ersten Lichtstrahls erfasst werden, der koaxial zu dem auf die Prozesszone auftreffenden ersten Lichtstrahl verläuft. Diese Abwandlungen führen zu einer platzsparenden Konfiguration der für das Verfahren eingesetzten Vorrichtung zum Laserschneiden.

In weiteren Abwandlungen kann der erste Lichtstrahl unabhängig von dem Bearbeitungslaserstrahl in die Vorrichtung zum Laserschneiden und/oder in den Schneidkopf geleitet werden, z.B. räumlich getrennt von dem Bearbeitungslaserstrahl.

In einer Abwandlung des Verfahrens kann der auf die Prozesszone geleitete erste Lichtstrahl hochfrequent, insbesondere mit einer Frequenz von 500 Hz bis 100 kHz, senkrecht zu seiner Ausbreitungsrichtung bewegt werden. Der Bearbeitungslaserstrahl kann in einer weiteren Abwandlung hochfrequent, insbesondere mit einer Frequenz von 500 Hz bis 100 kHz, insbesondere strahlformend, senkrecht zu seiner Ausbreitungsrichtung bewegt werden. Die Bewegung des Bearbeitungslaserstrahls kann mit einem DBS-System durchgeführt werden. Die Bewegungen des ersten Lichtstrahls und des Bearbeitungslaserstrahls können kombiniert mit einem DBS-System durchgeführt werden.

In einer Abwandlung des Verfahrens kann der auf die Prozesszone geleitete erste Lichtstrahl unabhängig von dem Bearbeitungslaserstrahl bewegt werden. Dies ermöglicht eine Bewegung, insbesondere eine Auslenkung, des ersten Lichtstrahls unabhängig vom Bearbeitungslaserstrahl und/oder unabhängig von einer Bewegung, insbesondere Auslenkung, des Bearbeitungslaserstrahls. Beispielsweise kann so eine Bewegung und/oder Auslenkung des ersten Lichtstrahls in einem Winkel, z.B. senkrecht, zur Schneidrichtung, realisiert werden. Ferner kann die Steuerung des ersten Lichtstrahls unabhängig von der Steuerung des Bearbeitungslaserstrahls erfolgen. Des Weiteren kann in dieser Abwandlung eine besonders hohe Auflösung und/oder Genauigkeit der Rekonstruktionen, Darstellungen und Abbildungen der Prozesszone, insbesondere des Schnittspalts, erhalten werden. Die Rekonstruktionen, Darstellungen und Abbildungen der Prozesszone, insbesondere des Schnittspalts, können ferner in überlappenden Bereichen der Prozesszone erstellt werden.

Ferner können der Bearbeitungslaserstrahl und der auf die Prozesszone geleitete erste Lichtstrahl synchron und/oder einander zumindest teilweise räumlich überlagernd bewegt werden. Dabei kann mit beiden Strahlen dieselbe Stelle der Prozesszone beaufschlagt werden, was eine direkte Beobachtung der aktuell bearbeiteten Stelle der Prozesszone ermöglicht.

In dem Verfahren kann der auf die Prozesszone geleitete erste Lichtstrahl hochfrequent mit einer Frequenz von 500 Hz bis 100 kHz parallel und/oder senkrecht zur Schneidrichtung bewegt werden. Dadurch kann eine linienförmige und/oder flächige Abtastung der Prozesszone durch den ersten Lichtstrahl realisiert werden. Mindestens ein Element ausgewählt aus dem auf die Prozesszone geleiteten ersten Lichtstrahl und/oder dem Bearbeitungslaserstrahl kann durch Reflektion und/oder Umlenken an mindestens einer, mit mindestens einem Aktuator hochfrequent bewegten, reflektierenden Oberfläche bewegt werden.

Die vorstehenden Abwandlungen mit kombinierter hochfrequenter Bewegung sowohl des Bearbeitungslaserstrahls als auch des ersten Lichtstrahls ermöglichen, platz- und kostensparend ein DBS-System, auch DBS-Scanner genannt, das eine Strahlformung des Bearbeitungslaserstrahls durchführt, auch für die optische Führung und für die dynamische Bewegung des ersten Lichtstrahls des Beleuchtungslaserstrahls zu nutzen. Ferner wird die Steuerung des Verfahrens vereinfacht, da keine zusätzliche Synchronisation zwischen der dynamischen Strahlformung des Bearbeitungslaserstrahls und der Phasenverschiebungsmessung notwendig ist. Die Einrichtung für die Phasenverschiebungsmessung ist leicht in den Schneidkopf integrierbar bzw. damit kombinierbar, wenn im Schneidkopf bereits ein DBS-Scanner vorgesehen ist. Ferner kann durch die Verwendung des DBS-Scanners für die Phasenverschiebungsmessung ermöglicht werden, dass die Phasenverschiebungsmessung an der Stelle auf dem Werkstück durchgeführt wird, auf der der Bearbeitungslaserstrahl auftrifft.

Des Weiteren kann der Beleuchtungslichtstrahl mit einer Kohärenzlänge zwischen 5 und 100 µm, bevorzugt 10 und 70 µm, mehr bevorzugt 20 und 50 µm, erzeugt werden. Durch eine derartige Kohärenzlänge kann die Mehrzahl von Wegstrecken, die der reflektierte erste Lichtstrahl von der Prozesszone zurücklegt, auf die Kohärenzlänge genau, d.h. mit einem entsprechenden Auflösungsvermögen, bestimmt werden.

Eine zweite Ausführungsform der Erfindung betrifft eine Vorrichtung zum Laserschneiden eines Werkstücks (siehe Anspruch 8), insbesondere zum Erzeugen eines Schnittspalts, mit einem Schneidkopf, der eine erste Schnittstelle für eine Laserquelle zum Erzeugen eines Bearbeitungslaserstrahls, eine zweite Schnittstelle zum Einleiten zumindest eines Teils eines kohärenten Beleuchtungslichtstrahls, insbesondere eines Beleuchtungslaserstrahls, der von einer Beleuchtungslichtquelle erzeugt wird, und eine Austrittsöffnung für den Bearbeitungslaserstrahl und den Beleuchtungslichtstrahl aufweist; einer Detektoreinrichtung zum Detektieren zumindest eines Teils des von einer Prozesszone des Werkstücks durch die Austrittsöffnung reflektierten Beleuchtungslichtstrahls wobei die Detektoreinrichtung einen Strahlungsintensitätssensor zum Erfassen einer Strahlungsintensität des Beleuchtungslichts aufweist; und einer Lichtstrahloptik zum Leiten des Bearbeitungslaserstrahls in Richtung der Austrittsöffnung und zum Leiten zumindest eines Teils des von der Prozesszone des Werkstücks durch die Austrittsöffnung reflektierten Beleuchtungslichtstrahls zur Detektoreinrichtung, wobei die Lichtstrahloptik einen Referenzspiegel und eine Einrichtung zum Teilen des Beleuchtungslichtstrahls in einen ersten Lichtstrahl und einen zweiten Lichtstrahl, zum Leiten des ersten Lichtstrahls in Richtung der Austrittsöffnung, zum Leiten des zweiten Lichtstrahls auf den Referenzspiegel und zum Leiten des vom Referenzspiegel reflektierten zweiten Lichtstrahls zur Detektoreinrichtung aufweist; und die Detektoreinrichtung eine Einrichtung zum Ermitteln einer Mehrzahl von Wegstrecken, die der reflektierte erste Lichtstrahl von der Prozesszone zurücklegt, anhand einer erfassten Strahlungsintensität einer Überlagerung mindestens eines Teils des von der Prozesszone reflektierten ersten Lichtstrahls und mindestens eines Teils des vom Referenzspiegel reflektierten zweiten Lichtstrahls aufweist. Dabei kann die Lichtstrahloptik zumindest teilweise im Schneidkopf vorgesehen sein.

In der Vorrichtung zum Laserschneiden ist die Einrichtung zum Ermitteln einer Mehrzahl von Wegstrecken ausgebildet, die Mehrzahl von Wegstrecken durch Minimieren von Phasenverschiebungen zwischen mindestens einem Teil des von der Prozesszone durch die Austrittsöffnung reflektierten ersten Lichtstrahls und mindestens einem Teil des vom Referenzspiegel reflektierten zweiten Lichtstrahls zu ermitteln. In einer weiteren Ausführung kann die Einrichtung zum Ermitteln einer Mehrzahl von Wegstrecken ausgebildet sein, den Referenzspiegel parallel zur Ausbreitungsrichtung des zweiten Lichtstrahls zu verschieben und/oder die zentrale Wellenlänge des Beleuchtungslichtstrahls zu verändern, zum Einstellen von maximalen konstruktiven Interferenzen des von der Prozesszone reflektierten ersten Lichtstrahls und des vom Referenzspiegel reflektierten zweiten Lichtstrahls. In einer weiteren Ausführung kann die Detektoreinrichtung zum Erzeugen mindestens eines Elements ausgewählt aus einer Querschnittsdarstellung der drei-dimensionalen Prozesszone, insbesondere des Schnittspalts, und einer dreidimensionalen Abbildung der Prozesszone, insbesondere des Schnittspalts, ausgebildet sein. Der Strahlungsintensitätssensor kann ferner zum flächigen Erfassen der Strahlungsintensität ausgebildet sein.

Des Weiteren kann die Lichtstrahloptik zum koaxialen Leiten des Bearbeitungslaserstrahls und des ersten Lichtstrahls auf die Prozesszone mit einer Abweichung von 0° bis 2°, bevorzugt 0,0° bis 0,5°, mehr bevorzugt 0,0° bis 0,1°, ausgebildet sein. Die Lichtstrahloptik kann zudem ausgebildet sein, mindestens einen Teil des von der Prozesszone reflektierten ersten Lichtstrahls, der koaxial zum auf die Prozesszone auftreffenden ersten Lichtstrahl verläuft, zur Detektoreinrichtung zu leiten. Ferner kann die Lichtstrahloptik ausgebildet sein, den ersten Lichtstrahl unabhängig von dem Bearbeitungslaserstrahl in die Vorrichtung zum Laserschneiden und/oder in den Schneidkopf zu leiten.

In einer Abwandlung der Vorrichtung zum Laserschneiden kann die Lichtstrahloptik eine Einrichtung zum hochfrequenten Bewegen des in Richtung der Austrittsöffnung geleiteten ersten Lichtstrahls senkrecht zu seiner Ausbreitungsrichtung, insbesondere mit einer Frequenz von mindestens von 500 Hz bis 100 kHz, aufweisen. In einer weiteren Abwandlung kann die Lichtstrahloptik eine Einrichtung zum hochfrequenten Bewegen des in Richtung der Austrittsöffnung geleiteten Bearbeitungslaserstrahls senkrecht zu seiner Ausbreitungsrichtung, insbesondere mit einer Frequenz von mindestens von 500 Hz bis 100 kHz, aufweisen.

Die Einrichtung zum hochfrequenten Bewegen des in Richtung der Austrittsöffnung geleiteten ersten Lichtstrahls kann zum Bewegen des ersten Lichtstrahls unabhängig von dem Bearbeitungslaserstrahl ausgebildet sein. Ferner kann die Einrichtung zum hochfrequenten Bewegen des in Richtung der Austrittsöffnung geleiteten ersten Lichtstrahls zum hochfrequenten Bewegen des ersten Lichtstrahls und des Bearbeitungslaserstrahls ausgebildet sein.

Zudem kann die Lichtstrahloptik mit der Einrichtung zum hochfrequenten Bewegen des in Richtung der Austrittsöffnung geleiteten ersten Lichtstrahls und/oder der Einrichtung zum hochfrequenten Bewegen des in Richtung der Austrittsöffnung geleiteten Bearbeitungslaserstrahls zum synchronen und/oder einander zumindest teilweise räumlich überlagernden Bewegen des Bearbeitungslaserstrahls und des auf die Prozesszone geleiteten ersten Lichtstrahls ausgebildet sein.

Die Einrichtung zum hochfrequenten Bewegen kann zum Bewegen des ersten Lichtstrahls parallel und/oder senkrecht zu einer Schneidrichtung ausgebildet sein. Des Weiteren kann die Einrichtung zum hochfrequenten Bewegen mindestens einen Aktuator und mindestens eine, mit dem mindestens einen Aktuator hochfrequent bewegliche, reflektierende Oberfläche, insbesondere mindestens einen Spiegel, aufweisen.

In der Vorrichtung zum Laserschneiden kann die Beleuchtungslichtquelle zum Erzeugen des Beleuchtungslichtstrahls mit einer Kohärenzlänge zwischen 5 und 100 µm, bevorzugt 10 und 70 µm, mehr bevorzugt 20 und 50 µm, ausgebildet sein. Ferner kann an der ersten Schnittstelle eine Laserquelle zum Erzeugen eines Bearbeitungslaserstrahls mit einer Leistung von mindestens 1 kW, mit einer zentralen Wellenlänge im Bereich von 1000 bis 1100 nm und mit einer Bandbreite von +/- 10 nm vorgesehen sein. An der zweiten Schnittstelle und/oder an mindestens einer weiteren Schnittstelle des Schneidkopfs kann mindestens ein Element ausgewählt aus einem Teil der Lichtstrahloptik, insbesondere dem Referenzspiegel und/oder einem Strahlteiler zum Teilen des Beleuchtungslichtstrahls in einen ersten und einen zweiten Lichtstrahl, einer Beleuchtungslichtquelle zum Erzeugen eines kohärenten Beleuchtungslichtstrahls mit einer Wellenlänge im Bereich von 500 nm bis 1400 nm, insbesondere eines Beleuchtungslaserstrahls, und der Detektoreinrichtung angebunden sein.

Eine dritte Ausführungsform der Erfindung ist ein Computerprogrammprodukt, umfassend ein oder mehrere Programmmodule, die bewirken, dass die Vorrichtung nach einer der vorstehenden Ausführungsformen und Abwandlungen Schritte des Verfahrens nach einer der vorstehenden Ausführungsformen und Abwandlungen ausführt, insbesondere wenn die Programmmodule in einen Speicher der Vorrichtung geladen werden, siehe Anspruch 17.

Mit den vorstehenden Ausführungsformen der Vorrichtung zum Laserschneiden eines Werkstücks können die gleichen Vorteile und Funktionen realisiert werden, wie mit den Ausführungsformen des Verfahrens zum Laserschneiden eines Werkstücks, insbesondere mit gleichlautenden und/oder analogen Merkmalen.

Weitere Merkmale und Zweckmäßigkeiten ergeben sich aus der folgenden Beschreibung von Ausführungsbeispielen, den Figuren und den Unteransprüchen. Die vorstehend genannten und die nachstehend erläuterten Merkmale können nicht nur in den angegebenen Kombinationen, sondern auch in anderen Kombinationen oder in Alleinstellung einsetzbar sein, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch ein erstes Ausführungsbeispiel einer Vorrichtung zum Laserschneiden eines Werkstücks;
- Fig. 2: schematisch ein zweites Ausführungsbeispiel einer Vorrichtung zum Laserschneiden eines Werkstücks;
- Fig. 3: schematisch ein drittes Ausführungsbeispiel einer Vorrichtung zum Laserschneiden eines Werkstücks;
- Fig. 4: schematisch ein viertes Ausführungsbeispiel einer Vorrichtung zum Laserschneiden eines Werkstücks;
- Fig. 5a: eine fotografische Abbildung eines geschnittenen Werkstücks mit einem Schnittspalt und mit einer Schnittfront;
- Fig. 5b: einen beispielhaften ermittelten Verlauf einer Schnittfront in Schneidrichtung; und
- Fig. 5c: einen beispielhaften ermittelten Verlauf eines Schnittspalts senkrecht zur Schneidrichtung.

Die Begriffe "Vorrichtung zum Laserschneiden eines Werkstücks" und "Vorrichtung zum Laserschneiden" werden vorliegend synonym verwendet. Die Begriffe "hochfrequente, strahlformende Bewegung" oder "dynamische Bewegung" eines Lichtstrahls oder Laserstrahls oder "hochfrequent bewegter" oder "dynamisch bewegter" Lichtstrahl oder Laserstrahl und Abwandlungen davon bedeuten vorliegend, dass der Lichtstrahl oder Laserstrahl hochfrequent, beispielsweise mit Frequenzen von 10 Hz bis 100 kHz, insbesondere über 500 Hz, bevorzugt 500 Hz bis 100 kHz, mehr bevorzugt 1000 Hz bis 90 kHz, bewegt wird. Analog gilt für den Begriff "dynamische Strahlformung", dass die Strahlformung durch dynamisch bewegliche, orientierbare und/oder verstellbare Elemente einer Lichtstrahloptik erfolgt, beispielsweise mit Frequenzen von 10 Hz bis 100 kHz, insbesondere über 500 Hz, bevorzugt 500 Hz bis 100 kHz, mehr bevorzugt 1000 Hz bis 90 kHz. Für den Begriff "dynamisch beweglich" gilt Analoges. In Ausführungsformen und Beispielen ist mit dem Begriff "Strahlungsintensität" die Strahlungsintensität des Beleuchtungslichts, insbesondere des von der Prozesszone reflektierten ersten Lichtstrahls und des vom Referenzspiegel reflektierten zweiten Lichtstrahls, gemeint.

Ein mit den folgenden Ausführungsbeispielen erzeugter Schnittspalt besitzt eine Schnittfront und mindestens eine Schnittkante. In allen Ausführungsformen kann die Laserquelle zum Erzeugen eines Bearbeitungslaserstrahls derart ausgebildet sein, dass ein kontinuierlicher und/oder diskontinuierlicher, insbesondere gepulster, Bearbeitungslaserstrahl bereitgestellt wird. In Ausführungsformen kann das Verfahren zum Laserschneiden mit einer Steuerungseinheit gesteuert werden. In Ausführungsformen kann die Vorrichtung zum Laserschneiden eine Steuerungseinheit beinhalten, mit der die Vorrichtung zum Laserschneiden und deren ansteuerbare Komponenten gesteuert werden können. In dem Verfahren zum Laserschneiden kann der Schneidkopf und/oder der Bearbeitungslaserstrahl in Schneidrichtung über das Werkstück bewegt werden. Die Vorrichtung zum Laserschneiden kann eine Schneidkopfbewegungseinheit beinhalten, mit der der Schneidkopf und/oder Bearbeitungslaserstrahl in Schneidrichtung über das Werkstück bewegt werden kann.

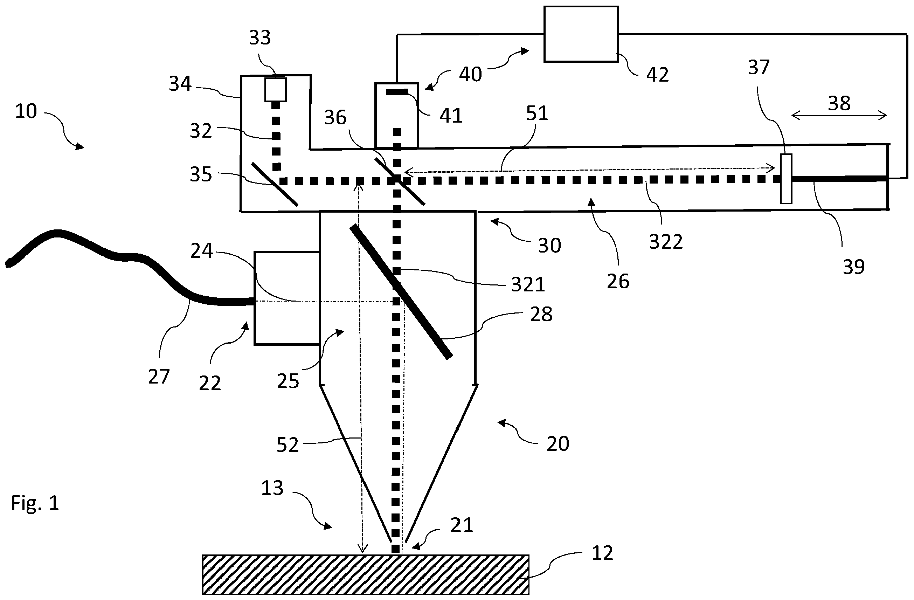

Fig. 1 zeigt schematisch als ein erstes Ausführungsbeispiel eine Vorrichtung 10 zum Laserschneiden eines Werkstücks 12. Bei dem Werkstück 12 handelt es sich im vorliegenden Beispiel um ein Blech aus Metall, z.B. Edelstahl, aus dem durch Laserschneiden Werkstückteile mit einer vorbestimmten Kontur erzeugt werden. Die Vorrichtung 10 zum Laserschneiden ist mit einem Schneidkopf 20 versehen. Der Schneidkopf 20 weist eine erste Schnittstelle 22 für eine Laserquelle zum Erzeugen eines Bearbeitungslaserstrahls 24 mit einer Leistung von 1kW oder mehr, einer zentralen Wellenlänge im Bereich von 1000 bis 1100 nm und einer Bandbreite von ca. +/-10nm auf. Vorliegend ist die erste Schnittstelle 22 seitlich im Schneidkopf 20 vorgesehen, um den Laserstrahl 24 seitlich in den Schneidkopf einzuleiten, in diesem Beispiel mittels einer Transportfaser 27. Alternativ kann die erste Schnittstelle 22 auch an anderer Stelle am Schneidkopf 20 vorgesehen sein. Am unteren Ende des Schneidkopfs ist eine Austrittsöffnung 21 vorgesehen. Zwischen der ersten Schnittstelle 22 und der Austrittsöffnung 21 ist in einem ersten Teil 25 einer Lichtstrahloptik der Vorrichtung 10 ein dichroitischer Spiegel 28 vorgesehen, mit dem der Bearbeitungslaserstrahl 24 umgelenkt und durch die Austrittsöffnung 21 des Schneidkopfs 20 geführt wird. Der erste Teil 25 der Lichtstrahloptik kann weitere optische Elemente, z.B. eine Linse, enthalten.

Am oberen Ende des Schneidkopfs 20 befindet sich eine zweite Schnittstelle 30, die zum Einleiten eines kohärenten Beleuchtungslichts dient, das mit einer Beleuchtungslichtquelle 33 erzeugt wird. Im vorliegenden Beispiel handelt es sich bei der Beleuchtungslichtquelle 33 um eine Laserquelle, die als das Beleuchtungslicht einen Beleuchtungslaserstrahl 32 mit einer Kohärenzlänge von 50 µm in einem Wellenlängenbereich von 500 bis 1400 nm erzeugt. Die Leistung der Beleuchtungslichtquelle 33 kann z.B. im Bereich von 0,1 mW bis 10 W gewählt sein. Die Beleuchtungslichtquelle 33 ist in einem Gehäuse 34 angeordnet, das an einer zweiten Schnittstelle 30 des Schneidkopfs angebracht ist. Innerhalb des Gehäuses 34 ist ein Strahlteiler 36 für den Beleuchtungslaserstrahl 32 und ein Referenzspiegel 37 am Ende einer Referenzstrecke 51 angeordnet. Beispielsweise handelt es sich bei dem Strahlteiler 36 um einen nichtpolarisierenden Strahlteilerwürfel, der den Strahl im Verhältnis von 50% zu 50% in transmittierten und in reflektierten Strahl aufteilt. Der Strahlteiler 36 dient zum Teilen des Beleuchtungslaserstrahls 32 in einen ersten Lichtstrahl 321 und einen zweiten Lichtstrahl 322, zum Leiten des ersten Lichtstrahls 321 in Richtung der Austrittsöffnung 21 und zum Leiten des zweiten Lichtstrahls 322 auf den Referenzspiegel 37. Der Strahlteiler 36 dient ferner zum Leiten des vom Referenzspiegel 37 reflektierten zweiten Lichtstrahls 322 und des von der Prozesszone reflektierten ersten Lichtstrahls 321 zu einer Detektoreinrichtung 40, die am Gehäuse 34 angebracht ist. Im vorliegenden Beispiel ist innerhalb des Gehäuses 34 ferner ein Umlenkspiegel 35 zum Umlenken des Beleuchtungslaserstrahls 32 in Richtung des Strahlteilers 36 vorgesehen. In anderen Beispielen ist der Umlenkspiegel 35 nicht vorgesehen und die Beleuchtungslichtquelle 33 ist auf der Position des Umlenkspiegels 35 angeordnet. Der Umlenkspiegel 35, der Strahlteiler 36 und der Referenzspiegel 37 bilden vorliegend einen zweiten Teil 26 der Lichtstrahloptik der Vorrichtung 10. Der dichroitische Spiegel 28 des ersten Teils 25 der Lichtstrahloptik ist für den Beleuchtungslaserstrahl 32, insbesondere für den ersten Lichtstrahl 321, selektiv transparent.

Im vorliegenden Beispiel sind der erste Teil 25 und der zweite Teil 26 der Lichtstrahloptik so ausgebildet, dass der Bearbeitungslaserstrahl 24 und der erste Lichtstrahl 321 koaxial, mit einer Abweichung von 0° bis 1°, durch die Austrittsöffnung 21 auf die Prozesszone 13 geleitet werden. Gleichzeitig wird der von der Prozesszone durch die Austrittsöffnung 21 reflektierte erste Lichtstrahl 321 koaxial zum auf die Prozesszone geleiteten ersten Lichtstrahl 321 zur Detektoreinrichtung geführt.

Der Referenzspiegel 37 ist im vorliegenden Beispiel parallel zur Ausbreitungsrichtung des zweiten Lichtstrahls 322 verschiebbar, veranschaulicht mit dem Pfeil 38. Das heißt, der Abstand 51 zwischen Strahlteiler 36 und Referenzspiegel 37 ist variierbar und einstellbar, und damit die Länge der Referenzstrecke 51. Im vorliegenden Beispiel ist der Referenzspiegel 37 auf einem Schlitten 39 mit einem ansteuerbaren Aktuator (nicht gezeigt) verschiebbar. Der Referenzspiegel 37 kann beispielsweise ein Spiegel aus Quarzglas mit einer dielektrischen Beschichtung sein, der im Bereich der Wellenlänge des zweiten Lichtstrahls 322 reflektierend ist.

Die Detektoreinrichtung 40 dient zum Detektieren zumindest eines Teils des von einer Prozesszone 13 des Werkstücks 12 durch die Austrittsöffnung 21 reflektierten ersten Lichtstrahls 321 und zum Erzeugen einer Abbildung der Prozesszone 13. Zu diesem Zweck weist die Detektoreinrichtung 40 einen Strahlungsintensitätssensor 41 im Frequenzbereich des Beleuchtungslaserstrahls 32 auf. Der Strahlungsintensitätssensor 41 ist im vorliegenden Beispiel als ein Punktsensor, z.B. eine Fotodiode, ausgebildet, mit dem die Strahlungsintensität des Beleuchtungslichts gemessen werden kann. Wird ein breitbandiger oder wellenlängendurchstimmbarer Beleuchtungslaser als Beleuchtungslichtquelle 33 eingesetzt, kann die Detektoreinrichtung 40 für eine breitbandige und/oder spektral auflösende Detektion, z.B. als Spektrometer, ausgebildet sein.

Die Detektoreinrichtung 40 beinhaltet zudem eine Einrichtung 42 zum Ermitteln einer Mehrzahl von Wegstrecken, die der reflektierte erste Lichtstrahl 321 von der Prozesszone 13 zurücklegt. Damit kann eine Tiefen-Dimension der Prozesszone, z.B. eines erzeugten Schnittspalts, bestimmt werden. Im vorliegenden Beispiel ist die Einrichtung 42 ausgebildet, kontinuierlich Intensitätsvariationen der im Strahlungsintensitätssensor 41 erfassten überlagerten ersten und zweiten Lichtstrahlen 321 und 322 zu messen. Das heißt, es werden kontinuierlich Variationen des im Strahlungsintensitätssensor 41 erhaltenen Signals bestimmt. In anderen Beispielen kann diese Messung diskontinuierlich durchgeführt werden. Ferner ist die Einrichtung 42 zum Verschieben des Referenzspiegels 37 ausgebildet. Im vorliegenden Beispiel ist der Aktuator des Referenzspiegels 37 drahtgebunden oder drahtlos datenleitend mit der Einrichtung 42 verbunden und durch diese ansteuerbar. So ist die Einrichtung 42 ausgebildet, während des Laserschneidens die Wegstrecke des zweiten Lichtstrahls 322 vom Referenzspiegel 37 zum Strahlteiler 36 an die Wegstrecke des ersten Lichtstrahls 321 von der Prozesszone 13 zum Strahlteiler 36 anzugleichen.

Die Vorrichtung 10 zum Laserschneiden besitzt im vorliegenden Beispiel eine Steuerungseinheit (nicht gezeigt). Die Vorrichtung 10 beinhaltet ferner eine Schneidkopfbewegungseinheit (nicht gezeigt), mit der der Schneidkopf 20 und somit der darin geführten Bearbeitungslaserstrahl 24 in Schneidrichtung in X- und/oder Y-Richtung über das Werkstück 12 bewegt werden kann. Mit der Schneidkopfbewegungseinheit kann der Schneidkopf 20 auch senkrecht zum Werkstück, d.h. in Z-Richtung, bewegt werden. Die Detektoreinrichtung 40, d.h. auch die Einrichtung 42 zum Ermitteln einer Mehrzahl von Wegstrecken, und die Schneidkopfbewegungseinheit sind mit der Steuerungseinheit drahtgebunden oder drahtlos datenleitend verbunden. In anderen Beispielen kann die Einrichtung 42 zum Ermitteln einer Mehrzahl von Wegstrecken Teil der Steuerungseinheit und nicht Teil der Detektoreinrichtung 40 sein.

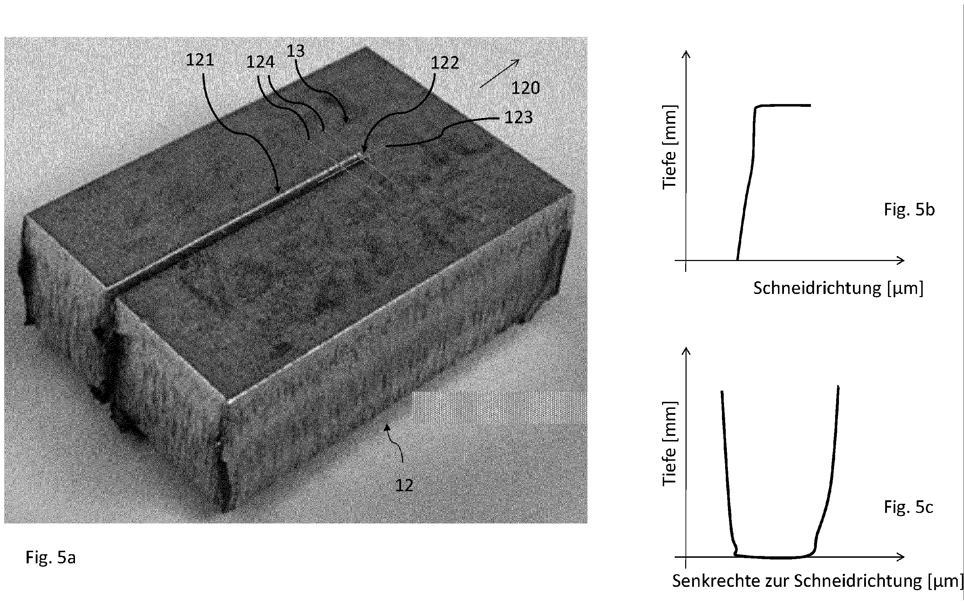

Im Betrieb der Vorrichtung 10 wird eine Prozesszone 13 des Werkstücks 12 mit dem Bearbeitungslaserstrahl 24 bestrahlt. Die Schneidkopfbewegungseinheit der Vorrichtung 10 bewegt den Schneidkopf 20 und somit den darin geführten Bearbeitungslaserstrahl 24 in einer Schneidrichtung 120 über das Werkstück 12. Das Werkstück 12 wird in Schneidrichtung 120 geschnitten. Dabei wird in der Prozesszone 13 des Werkstücks 12 ein Schnittspalt 121 mit einer vorderen Schnittfront 122 erzeugt, wie in der fotografischen Abbildung der Fig. 5a veranschaulicht ist.

Mit der Detektoreinrichtung 40 wird die Prozesszone 13 im vorliegenden Beispiel während des Schneidens kontinuierlich beobachtet. In anderen Beispielen kann die Beobachtung der Prozesszone 13 diskontinuierlich durchgeführt werden.

Mit der Einrichtung 42 zum Ermitteln einer Mehrzahl von Wegstrecken und dem Referenzspiegel 37 wird eine Phasenverschiebungsmessung ausgeführt und eine Tiefen-Dimension der Prozesszone 13 und des Schnittspalts 121 wird bestimmt. Der kohärente Beleuchtungslaserstrahl 32 aus der Beleuchtungslichtquelle 33 wird an dem Strahlteiler 36 in zwei Teile aufgeteilt. Der so erzeugte erste Lichtstrahl 321 wird auf das Werkstück 12 geleitet und dort reflektiert. Der erzeugte zweite Lichtstrahl 322 wird auf den Referenzspiegel 37 geleitet und dort reflektiert. Der reflektierte zweite Lichtstrahl 322 wird zumindest teilweise am Strahlteiler 36 zur Detektoreinrichtung 40 umgelenkt. Der von der Prozesszone 13 reflektierte erste Lichtstrahl 321 durchläuft zumindest teilweise den dichroitischen Spiegel 28 und den Strahlteiler 36. Hinter dem Strahlteiler 36 überlagern sich die beiden reflektierten ersten und zweiten Lichtstrahlen 321 und 322 und werden von dem Intensitätssensor 41 erfasst. Die Einrichtung 42 zum Ermitteln einer Mehrzahl von Wegstrecken verschiebt den Referenzspiegel 37, um die Wegstrecke des zweiten Lichtstrahls 322 vom Referenzspiegel 37 zum Strahlteiler 36, d.h. die Referenzstrecke 51 (also den Abstand zwischen dem Referenzspiegel 37 und dem Strahlteiler 36), an die Wegstrecke des ersten Lichtstrahls 321 von der Prozesszone 13 zum Strahlteiler 36, d.h. an den Abstand 52 zwischen der Prozesszone 13 und dem Strahlteiler 36, anzugleichen.

Ist die Referenzstrecke 51 zwischen dem Strahlteiler 36 und dem Referenzspiegel 37 ungefähr gleich dem Abstand 52 zwischen dem Strahlteiler 36 und dem Werkstück 12, interferieren der reflektierten erste Lichtstrahl 321 und der reflektierte zweite Lichtstrahl 322 hinter dem Strahlteiler 36 konstruktiv und das vom Strahlungsintensitätssensor 41 detektierte Signal ist maximal. Unterscheiden sich hingegen die Referenzstrecke 51 und der Abstand 52 mehr als die Kohärenzlänge des Beleuchtungslaserstrahls 32, so resultiert ein kleineres Signal im Strahlungsintensitätssensor 41. Die Referenzstrecke 51 zwischen dem Strahlteiler 36 und dem Referenzspiegel 37 entspricht der Wegstrecke des zweiten Lichtstrahls 322 vom Referenzspiegel 37 zum Strahlteiler 36. Der Abstand 52 zwischen dem Strahlteiler 36 und dem Werkstück 12 entspricht der Wegstrecke des ersten Lichtstrahls 321 von der Prozesszone 13 zum Strahlteiler 36. Aufgrund der geringen Kohärenzlänge des Beleuchtungslaserstrahls 32 von 50 µm kann der Abstand 52 auf 50 µm genau bestimmt werden.

Der Referenzspiegel 37 wird parallel zur Ausbreitungsrichtung des zweiten Lichtstrahls 322 verschoben, und der Abstand zwischen dem Strahlteiler 36 und dem Referenzspiegel 37, d.h. die Referenzstrecke 51, wird verändert. Durch Vergleichen der Referenzstrecke 51 mit dem Abstand 52 zwischen dem Strahlteiler 36 und dem Werkstück 12 wird Letzterer exakt gemessen. Dies geschieht mit der Einrichtung 42 zum Ermitteln einer Mehrzahl von Wegstrecken, indem das Signal im Strahlungsintensitätssensor 41 als Funktion der Länge der Referenzstrecke 51, d.h. in Abhängigkeit von der Verschiebung des Referenzspiegels 37, bestimmt wird. Auf diese Weise werden die Phasenverschiebungen zwischen dem von der Prozesszone 13 durch die Austrittsöffnung 21 reflektierten ersten Lichtstrahl 321 und dem vom Referenzspiegel 37 reflektierten zweiten Lichtstrahl 322 gemessen. Bei einem Maximum des Signals sind die Phasenverschiebungen minimiert. Ein maximales Signal zeigt an, dass der Abstand zwischen dem Strahlteiler 36 und dem Referenzspiegel 37, d.h. die Referenzstrecke 51, ungefähr gleich dem Abstand 52 zwischen dem Strahlteiler 36 und dem Werkstück 12 ist. So wird anhand der Referenzstrecke 51 der Abstand 52 als die Wegstrecke, die der reflektierte erste Lichtstrahl 321 von der Prozesszone 13 zurücklegt, ermittelt.

Die Wegstrecke, die der reflektierte erste Lichtstrahl 321 von der Prozesszone 13 zurücklegt, wird während des Laserschneidens wiederholt bestimmt. So werden Tiefen-Informationen, d.h. Informationen über den Schnittspalt 121 und/oder die Schnittfront 122 in Z-Richtung erhalten und deren Verlauf in Z-Richtung kann rekonstruiert werden. Diese Tiefen-Informationen werden in der Detektoreinrichtung 40 und/oder in der Steuereinrichtung der Vorrichtung zum Laserschneiden als eine Tiefen-Dimension der Prozesszone 13 und des Schnittspalts 121 bestimmt. Wird der Verlauf der Schnittfront 122 in Z-Richtung in Abhängigkeit von der Schneidrichtung 120 aufgetragen, wie in Fig. 5b dargestellt, wird eine Querschnittsdarstellung durch die dreidimensionale Struktur der Schnittfront erhalten. Wird der Verlauf des Schnittspalts 121 in Z-Richtung entlang der Senkrechten zur Schneidrichtung 120 aufgetragen, wie in Fig. 5c dargestellt, wird eine Querschnittsdarstellung durch die drei-dimensionale Struktur des Schnittspalts erhalten. Durch Kombination einer Vielzahl von parallelen Verläufen des Schnittspalts 121, die über eine Zeitdauer des Schneidens bestimmt werden, wird die dreidimensionale Struktur des Schnittspalts abgebildet. Bei Kombination einer Vielzahl von parallelen Verläufen der Schnittfront, die über einen eng begrenzten Zeitraum bestimmt werden, wird die drei-dimensionale Struktur der Schnittfront 122 abgebildet. Auf diese Weise wird eine dreidimensionale Abbildung des Schnittspalts 121 und/oder der Schnittfront 122 erhalten. Anhand der Querschnittsdarstellungen und der drei-dimensionalen Abbildungen kann beispielsweise die Oberflächenbeschaffenheit der Schnittkante bzw. der Schnittfront, z.B. eine unerwünschte Bildung von z.B. Riefen, Rillen oder Grat, etc. bestimmt werden.

Die Vorrichtung 10 kann somit bei einem Verfahren zum Laserschneiden eines Werkstücks für Überwachungs-Prozeduren, wie z.B. die Beobachtung des erzeugten Schnittspalts und/oder der Schnittfront, für die Messung von Oberflächendefekten, für eine Prozessüberwachung und/oder für eine Prozessregelung eingesetzt werden. Das Verfahren zum Laserschneiden und/oder die genannten Überwachungs-Prozeduren können durch ein oder mehrere Programmmodule bewirkt werden, wenn die Programmmodule in einen Speicher der Vorrichtung 10, z.B. einen Speicher der Einrichtung 42 zum Ermitteln einer Mehrzahl von Wegstrecken und/oder einen Speicher der Steuerungseinheit, geladen werden.

In einer Abwandlung des ersten Beispiels (nicht gezeigt) ist die Beleuchtungslichtquelle 33 und nicht der Referenzspiegel 37 mit der Einrichtung 42 zum Ermitteln einer Mehrzahl von Wegstrecken drahtgebunden oder drahtlos datenleitend verbunden und durch diese ansteuerbar. So kann während des Schneidens mit der Einrichtung 42 die Phasenverschiebungsmessung durch Verändern der zentralen Wellenlänge des Beleuchtungslaserstrahls 32 ausgeführt werden. Gemäß einer weiteren Abwandlung sind die Beleuchtungslichtquelle 33 und der Referenzspiegel 37 mit der Einrichtung 42 zum Ermitteln einer Mehrzahl von Wegstrecken datenleitend verbunden und durch diese ansteuerbar. Dadurch kann die Phasenverschiebungsmessung sowohl durch Verändern der zentralen Wellenlänge des Beleuchtungslaserstrahls 32 als auch durch Verschieben des Referenzspiegels 37 ausgeführt werden.

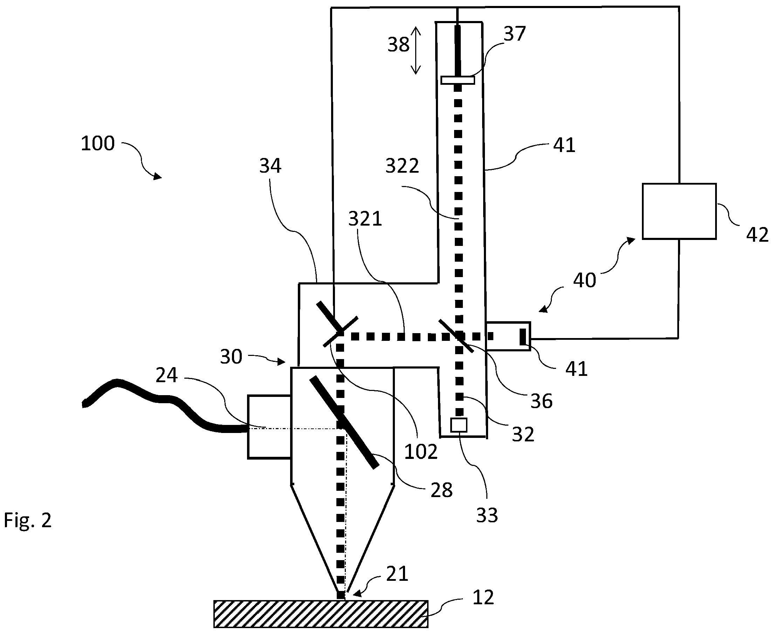

Fig. 2 zeigt schematisch eine Vorrichtung 100 als ein zweites Beispiel. Im Unterschied zur Vorrichtung 10 ist in der Vorrichtung 100 zwischen dem dichroitischen Spiegel 28 und dem Strahlteiler 36 mindestens eine reflektierende bewegliche Oberfläche 102 vorgesehen. Die reflektierende bewegliche Oberfläche 102 kann im Gehäuse 34, wie in Fig. 2 dargestellt, oder im Schneidkopf 20 positioniert sein. Die mindestens eine bewegliche Oberfläche 102 ist derart angeordnet und ausgerichtet, dass sie den an dem Strahlteiler 36 erzeugten ersten Lichtstrahl 321 zur Austrittsöffnung 21 umlenkt. Ferner lenkt sie den von der Prozesszone reflektierten ersten Lichtstrahl 321 zum Strahlteiler 36 und in Richtung der Detektoreinrichtung 40 um. Die mindestens eine reflektierende Oberfläche 102 ist mit einem oder mehreren Aktuatoren (nicht gezeigt), z.B. Piezo-Aktuatoren, zumindest teilweise dynamisch verstellbar. Beispielsweise ist die bewegliche Oberfläche 102 mit mindestens einem Aktuator im Ganzen dynamisch in einem Frequenzbereich von 500 Hz bis 100 kHz verstellbar. Ferner kann die Oberflächengeometrie, insbesondere die Krümmung der beweglichen Oberfläche 102 dynamisch verstellbar sein. Der mindestens eine Aktuator ist drahtlos oder drahtgebunden datenleitend mit der Einrichtung 42 zum Ermitteln einer Mehrzahl von Wegstrecken verbunden und durch diese ansteuerbar.

Im vorliegenden Beispiel ist als die bewegliche Oberfläche 102 ein dynamisch orientierbarer planer Spiegel aus z.B. mit einer dielektrischen Beschichtung versehenen Quarzglas vorgesehen. Mit mindestens einem ansteuerbaren Piezo-Aktuator ist der Spiegel dynamisch beweglich und dadurch orientierbar. Die Einheit aus Spiegel und mindestens einem Aktuator wird auch PiezoScanner genannt. Beispielsweise handelt es sich um einen Piezo-Aktuator auf Basis einer modifizierten PZT(Blei-Zirkonat-Titanat)-Keramik mit einer typischen Antriebsspannung von 120 V. In einer weiteren Abwandlung des zweiten Beispiels sind zwei Spiegel als bewegliche reflektierende Oberflächen vorgesehen, die Teil eines Galvanometer-Scanners sind. Diese sind jeweils mittels individuell ansteuerbaren Galvanometern als Aktuatoren individuell dynamisch beweglich. Dadurch können die zwei Spiegel derart zu einander orientiert und bewegt werden, dass der erste Lichtstrahl 321 zweimal umgelenkt und gleichzeitig dynamisch bewegt wird.

Im Betrieb steuert die Einrichtung 42 zum Ermitteln einer Mehrzahl von Wegstrecken den Aktuator der beweglichen Oberfläche 102 derart an, dass der an dem Strahlteiler 36 erzeugte erste Lichtstrahl 321 auf einer Linie oder flächig über die Prozesszone 13 bewegt wird. D.h. die Prozesszone wird mit dem ersten Lichtstahl 321 beleuchtet und dabei mit dem ersten Lichtstahl 321 in mindestens einer Richtung gescannt. In einem Betriebsmodus wird der erste Lichtstrahl 321 auf einer Linie in Schneidrichtung 120, d.h. ein-dimensional, hin und her bewegt, was in Fig. 5a durch die Linie 123 veranschaulicht ist. Dadurch wird der Verlauf der Schnittfront 122 in Z-Richtung und in Schneidrichtung mit dem ersten Lichtstrahl 321 des Beleuchtungslichts, also zwei-dimensional, abgetastet. Ein beispielhafter ermittelter Verlauf, d.h. ein Profil der Schnittfront in Schneidrichtung 120 ist in Fig. 5b als eine Querschnittsdarstellung in Z-Richtung gezeigt. In einem weiteren Betriebsmodus wird der erste Lichtstrahl 321 senkrecht zur Schneidrichtung 120, d.h. eindimensional, hin und her bewegt. Dadurch wird der Schnittspalt 121 in Z-Richtung und senkrecht zur Schneidrichtung 120, also zwei-dimensional abgetastet. Der erste Lichtstrahl 321 des Beleuchtungslichts wird auf einer Linie oder nacheinander auf mehreren Linien senkrecht zur Schneidrichtung 120 hin und her bewegt. Aufgrund des Vorschubs, mit dem der Bearbeitungslaserstrahl 24 über das Werkstück 12 bewegt wird, kann der Verlauf des Schnittspalts 121 in Schneidrichtung 122 während des Schneidens kontinuierlich oder diskontinuierlich abgetastet und verfolgt werden. Dies ist in Fig. 5a mit den Linien 124 veranschaulicht. Ein beispielhafter ermittelter Verlauf, d.h. ein Profil des Schnittspalts 121 senkrecht zur Schneidrichtung 120 ist in Fig. 5c als eine Querschnittsdarstellung in Z-Richtung gezeigt. In den Betriebsmodi der Fig. 5b und 5c muss nur eine Querschnitts-Ebene durch eindimensionales Abtasten (Scannen) bestimmt werden. Daher können höhere Aufzeichnungsfrequenzen gefahren werden ohne die Datenübertragung zu stark zu strapazieren.

In einem anderen Betriebsmodus wird der erste Lichtstrahl 321 auf einer Linie in Schneidrichtung 120 und auf einer Linie senkrecht zur Schneidrichtung 120 bewegt. Dadurch wird der Schnittspalt 121 in Schneidrichtung und senkrecht zur Schneidrichtung in Z-Richtung, also drei-dimensional, mit dem ersten Lichtstrahl 321 des Beleuchtungslichts abgetastet. Geschieht dies beispielsweise über die gesamte Dauer des Schneidens kann der gesamte erzeugte Schnittspalt 121 einschließlich der Schnittfront 122 erfasst und abgebildet werden. In zusätzlichen Betriebsmodi wird der erste Lichtstrahl 321 in beliebigen Richtungen relativ zur Schneidrichtung oder in beliebigen Kombinationen von Richtungen in Schneidrichtung und/oder relativ zur Schneidrichtung bewegt. In einem beispielhaften Betriebsmodus oszilliert der erste Lichtstrahl 321 auf einer Kreisbahn. In allen Betriebsmodi der Einrichtung 42 zum Ermitteln einer Mehrzahl von Wegstrecken wird die Prozesszone 13 mit dem ersten Lichtstrahl 321 in Z Richtung erfasst und so eine Tiefen-Dimension der Prozesszone bestimmt.

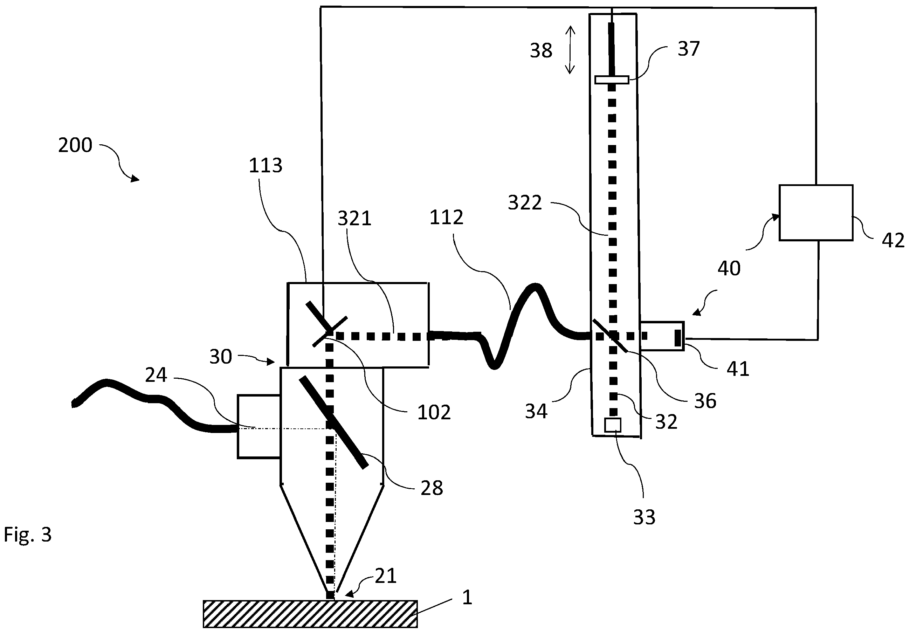

Fig. 3 zeigt schematisch eine Vorrichtung 200 als ein drittes Beispiel. Im Unterschied zur Vorrichtung 100 ist in der Vorrichtung 200 das Gehäuse 34 nicht an der Schnittstelle 30 des Schneidkopfs 20 vorgesehen. Vielmehr ist das Gehäuse 34 entfernt vom Schneidkopf 20 angeordnet. An der Schnittstelle 30 ist eine Adaptereinheit 113, in der die bewegliche Oberfläche 102 vorgesehen ist, angeordnet. Der am Strahlteiler 36 erzeugte erste Lichtstahl 321 wird über eine an der Adaptereinheit 113 angebundene Transportfaser 112 in den Schneidkopf 20 geleitet, an der beweglichen Oberfläche 102 zur Austrittsöffnung 21 umgelenkt und nach Reflektion an der Prozesszone und Umlenkung an der beweglichen Oberfläche 102 über die Transportfaser 112 wieder in das Gehäuse 34 in Richtung der Detektorvorrichtung 40 geführt. Analog kann auch bei dem in Fig. 1 dargestellten ersten Beispiel das Gehäuse 34 entfernt vom Schneidkopf 20 angeordnet und mit diesem über eine Transportfaser verbunden sein.

In Modifikationen des zweiten Beispiels und des dritten Beispiels ist der dichroitische Spiegel 28 als ein DBS-Scanner ausgebildet, um den Bearbeitungslaserstrahl 24 dynamisch zu bewegen und/oder diesen zu formen, während der dichroitische Spiegel 28 für den ersten Lichtstrahl 321 transparent ist und den ersten Lichtstrahl nicht bewegt. Beispielsweise ist der Spiegel 28 mit mindestens einem ansteuerbaren Piezo-Aktuator dynamisch beweglich und dadurch orientierbar.

Im zweiten und dritten Beispiel wird deutlich, dass der auf die Prozesszone geleitete erste Lichtstrahl 321 unabhängig von dem Bearbeitungslaserstrahl 24 ausgelenkt wird. Dies ermöglicht eine Bewegung, insbesondere eine Auslenkung, des ersten Lichtstrahls 321 unabhängig vom Bearbeitungslaserstrahl 24 und/oder unabhängig von einer Bewegung, insbesondere Auslenkung, des Bearbeitungslaserstrahls 24. Beispielsweise kann so eine oszillierende oder pendelnde Bewegung und/oder Auslenkung des ersten Lichtstrahls 321 in einem Winkel, z.B. senkrecht, zur Schneidrichtung, realisiert werden. Ferner kann die Steuerung des ersten Lichtstrahls 321 unabhängig von der Steuerung des Bearbeitungslaserstrahls 24 erfolgen. Des Weiteren kann eine besonders hohe Auflösung und/oder Genauigkeit der Rekonstruktionen, Darstellungen und Abbildungen der Prozesszone, insbesondere des Schnittspalts, erhalten werden. Die Rekonstruktionen, Darstellungen und Abbildungen der Prozesszone, insbesondere des Schnittspalts, können ferner in überlappenden Bereichen der Prozesszone erstellt werden.

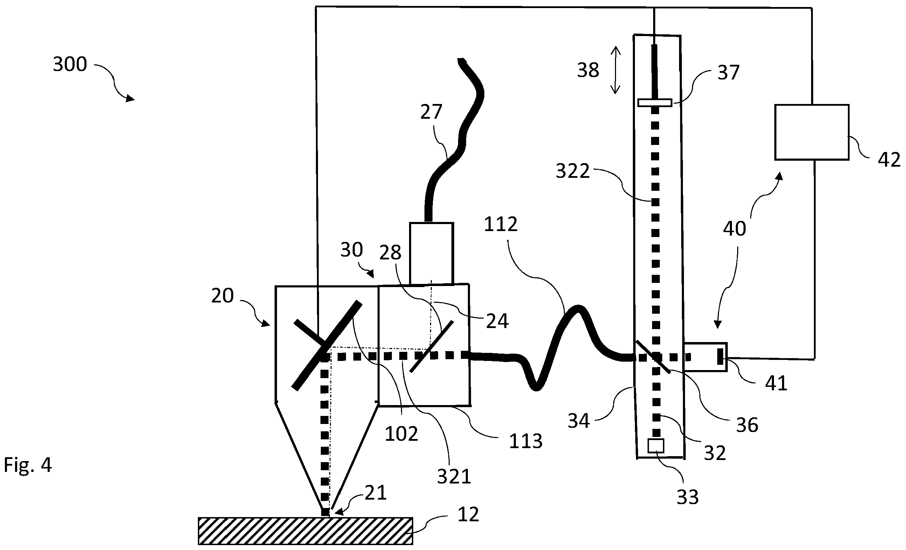

Fig. 4 zeigt schematisch eine Vorrichtung 300 als ein viertes Beispiel. Im Unterschied zur Vorrichtung 200 der Fig. 3 werden in diesem Beispiel nicht nur der am Strahlteiler 36 erzeugte erste Lichtstahl 321, sondern auch der Bearbeitungslaserstrahl 24 über die Adaptereinheit 113 in den Schneidkopf 20 geleitet. Ferner werden sowohl der am Strahlteiler 36 erzeugte erste Lichtstahl 321 als auch der Bearbeitungslaserstrahl 24 mit der mindestens einen reflektierenden beweglichen Oberfläche 102 dynamisch bewegt. Als die bewegliche Oberfläche 102 ist in diesem Beispiel ein dynamisch orientierbarer planer Spiegel aus z.B. beschichtetem SiC (Siliziumcarbid) vorgesehen, der sowohl für die Reflektion des ersten Lichtstrahls 321 als auch für die Reflektion des Bearbeitungslaserstrahls 24 geeignet ist. Im vorliegenden Beispiel ist die Schnittstelle 30 seitlich am Schneidkopf 20 angeordnet und an der seitlichen Schnittstelle 30 ist die Adaptereinheit 113 vorgesehen. In Abwandlungen dieses Beispiels kann die Schnittstelle 30 und somit die Adaptereinheit 113 auch an anderer Stelle am Schneidkopf 20 vorgesehen sein, mit entsprechend angepasster räumlicher Ausgestaltung des Schneidkopfs. Ferner ist die Transportfaser 27 des Bearbeitungslaserstrahls 24 an der Adaptereinheit 113 angebunden. In der Adaptereinheit 113 ist der dichroitische Spiegel 28 vorgesehen, mit dem in diesem Beispiel der Bearbeitungslaserstrahl 24 in den Schneidkopf 20 umgelenkt wird. Der dichroitische Spiegel 28 ist für den ersten Lichtstrahl 321 transparent. Die mindestens eine reflektierende bewegliche Oberfläche 102 ist zwischen dem dichroitischen Spiegel 28 und der Austrittsöffnung 21 des Schneidkopfs 20 positioniert.

Im Betrieb der Vorrichtung 300 lenkt die mindestens eine reflektierende bewegliche Oberfläche 102 sowohl den Bearbeitungslaserstrahl 24 als auch den ersten Lichtstrahl 321 zur Austrittsöffnung 21 um. Dabei bewegt die mindestens eine reflektierende bewegliche Oberfläche 102 sowohl den Bearbeitungslaserstrahl 24 als auch den ersten Lichtstrahl 321 in der Prozesszone 13 dynamisch über das Werkstück 12, insbesondere mit einer hochfrequenten Oszillation. Hierbei erfolgt eine dynamische Strahlformung (DBS) des Bearbeitungslaserstrahls 24. Der erste Lichtstrahl 321 wird synchron zu dem Bearbeitungslaserstrahl 24 und räumlich überlagert von dem Bearbeitungslaserstrahl 24 bewegt. Des Weiteren lenkt die reflektierende bewegliche Oberfläche 102 den an der Prozesszone reflektierten ersten Lichtstrahl 321 in Richtung der Transportfaser 112 um, über die der erste Laserstrahl 321 in das Gehäuse 34 und in Richtung des Detektors 40 geleitet wird.

In diesem Beispiel wird also vorteilhaft und platzsparend ein DBS-System, auch DBS-Scanner genannt, das mit der mindestens einen reflektierenden beweglichen Oberfläche 102 die Strahlformung des Bearbeitungslaserstrahls 24 durchführt, auch für die optische Führung und für die dynamische Bewegung des ersten Lichtstrahls 321 des Beleuchtungslaserstrahls 32 genutzt. Weitere Vorteile sind die resultierende Kostenersparnis, da für die Phasenverschiebungsmessung keine zusätzliche reflektierende bewegliche Oberfläche erforderlich ist. Ferner ist keine zusätzliche Synchronisation zwischen der dynamischen Strahlformung des Bearbeitungslaserstrahls 24 und der Phasenverschiebungsmessung notwendig. Die Einrichtung für die Phasenverschiebungsmessung ist leicht in den Schneidkopf 20 integrierbar bzw. damit kombinierbar, wenn im Schneidkopf bereits ein DBS-Scanner vorgesehen ist. Ferner kann durch die Verwendung des DBS-Scanners für die Phasenverschiebungsmessung ermöglicht werden, dass die Phasenverschiebungsmessung an der Stelle auf dem Werkstück durchgeführt wird, auf der der Bearbeitungslaserstrahl 24 auftrifft.

In Abwandlungen des zweiten bis vierten Beispiels wird als reflektierende dynamisch bewegliche Oberfläche 102 ein Segmentspiegel mit mehreren voneinander getrennten, nebeneinander benachbart angeordneten Spiegelsegmenten genutzt, die ein Muster bilden. Jedes Spiegelsegment besitzt z.B. eine Gold-Beschichtung, ist reflektiv für den Bearbeitungslaserstrahl 24 und/oder für den ersten Lichtstrahl 321 des Beleuchtungslichts und ist mittels einem Piezo-Aktuator individuell dynamisch orientierbar. Auf diese Weise wird eine reflektierende, segmentierte Gesamtoberfläche bereitgestellt, deren Oberflächengeometrie, insbesondere deren Krümmung, hoch dynamisch verstellbar ist.

In weiteren Abwandlungen des zweiten bis vierten Beispiels ist die reflektierende dynamisch bewegliche Oberfläche 102 als ein verformbarer Spiegel (DM, Dynamic Mirror) ausgebildet, um eine bewegliche, reflektierende, kontinuierliche Oberfläche bereitzustellen. Der Spiegel wird durch eine Membran aus verformbaren Material gebildet, die mittels Aktuatoren dynamisch verformbar ist. Auf der Unterseite der Membran befinden sich zu diesem Zweck individuell ansteuerbare, in einem Muster gleichmäßig verteilte Aktuatoren. Die Oberseite der Membran ist mit einer hochreflektierenden dielektrischen Multilagen-Beschichtung versehen und ist reflektiv für den Bearbeitungslaserstrahl 24 und/oder für den ersten Lichtstrahl 321 des Beleuchtungslichts. Die bewegliche, reflektierende, kontinuierliche Oberfläche des verformbaren Spiegels (DM, Dynamic Mirror) kann analog wie der zuvor beschriebenen Segmentspiegel betrieben werden.

Alle Ausführungsformen und Beispiele ermöglichen eine Erfassung der drei-dimensionalen Prozesszone mit Informationen über die Schnittfrontgeometrie und/oder Schnittspaltgeometrie und über eventuelle Oberflächendefekte, wie Riefen und Grat. Es kann ein Verlauf der Schnittfront in Z-Richtung und/oder ein Verlauf einer Schnittkante des Schnittspalts oder des gesamten Schnittspalts in Z-Richtung rekonstruiert werden. Beispielsweise kann jeweils als Verlauf ein Querschnitt durch die zugehörige drei-dimensionale Struktur dargestellt werden. Durch Kombination einer Vielzahl von ermittelten Verläufen des Schnittspalts 121 kann die dreidimensionale Struktur des Schnittspalts abgebildet werden. Die genannten Rekonstruktionen, Darstellungen und Abbildungen können in Echtzeit während des Laserschneidens, z.B. als Videostream, erhalten werden. Zudem können Informationen über die Geschwindigkeitsverteilung des beim Laserschneiden im Schnittspalt erzeugten Schmelzbades des Werkstückmaterials erhalten werden, z.B. durch Differenzbilder der Schnittspaltgeometrie. Mithilfe dieser Informationen können Ursachen für Qualitätseinbußen erkannt und durch Anpassung der Prozessparameter beim Laserschneiden kompensiert werden. Ist die Schnittspaltgeometrie bekannt, insbesondere der Verlauf der Schnittfront, so kann der Schneidzustand gut erkannt und die Schneidperformance optimal geregelt werden. Wird zudem die Rauheit sowie die Gratanhaftung an der Schnittkante erfasst, so kann die Schneidqualität direkt ermittelt werden. Eine vergleichsweise deutlich stabilere und genauere Online-Schneidqualitätsschätzung kann dadurch realisiert werden.

Durch die Phasenverschiebungsmessung werden Tiefen-Informationen über die Prozesszone, insbesondere Informationen über den Schnittspalt 121 und/oder die Schnittfront 122 erhalten. Wenn die Wegstrecke, die der reflektierte erste Lichtstrahl 321 von der Prozesszone 13 zurücklegt, entlang der Schnittfront 122 gemessen wird, kann der Verlauf der Schnittfront 122 in Z-Richtung rekonstruiert und als Querschnitt durch deren dreidimensionale Struktur abgebildet werden. Wird die Wegstrecke, die der reflektierte erste Lichtstrahl 321 von der Prozesszone 13 zurücklegt, entlang der Schnittkanten des Schnittspalts 122 z.B. quer zum Schnittspalt 122 gemessen, kann der Verlauf der Schnittkante bzw. des Schnittspalts in Z-Richtung rekonstruiert werden. Ein derart erhaltener Verlauf kann als Querschnitt durch die drei-dimensionale Struktur des Schnittspalts dargestellt werden. Bei Kombination einer Vielzahl rekonstruierter Verläufe des Schnittspalts kann dieser drei-dimensional abgebildet werden. Bei Kombination einer Vielzahl in einem engen Zeitraum erhaltener Verläufe der Schnittfront kann auch diese drei-dimensional abgebildet werden. Mit den Ausführungsformen und Beispielen können daher Schneidabriss und Qualitätseinbussen gut erkannt werden, z.B. raue Schnittkanten, Gratanhaftung und Schlackenbildung an den geschnittenen Werkstückteilen. Da Tiefen-Informationen, d.h. Informationen über den Schnittspalt 121 und/oder die Schnittfront 122 in Z-Richtung, erhalten werden, können Qualitätseinbussen auch in einzelnen Ebenen des geschnittenen Werkstücks erkannt werden, wie z.B. Grat an dessen Unterseite.

### Bezugszeichenliste

- 10: Vorrichtung zum Laserschneiden
- 12: Werkstück
- 13: Prozesszone
- 20: Schneidkopf
- 21: Austrittsöffnung
- 22: erste Schnittstelle
- 24: Bearbeitungslaserstrahl
- 25: erster Teil der Lichtstrahloptik
- 26: zweiter Teil der Lichtstrahloptik
- 27: Transportfaser
- 28: dichroitischer Spiegel
- 30: zweite Schnittstelle
- 32: Beleuchtungslaserstrahl
- 33: Beleuchtungslichtquelle
- 34: Gehäuse
- 35: Umlenkspiegel
- 36: Strahlteiler
- 37: Referenzspiegel
- 38: Pfeil
- 39: Schlitten
- 40: Detektoreinrichtung
- 41: Strahlungsintensitätssensor
- 42: Einrichtung zum Ermitteln einer Mehrzahl von Wegstrecken
- 51: Referenzstrecke (Abstand zwischen Strahlteiler und Referenzspiegel)
- 52: Wegstrecke, Abstand zwischen Strahlteiler und dem Werkstück
- 100: Vorrichtung zum Laserschneiden
- 102: reflektierende bewegliche Oberfläche
- 112: Transportfaser
- 113: Adaptereinheit
- 120: Schneidrichtung
- 121: Schnittspalt
- 122: Schnittfront
- 123: Linie
- 124: Linie
- 200: Vorrichtung zum Laserschneiden
- 300: Vorrichtung zum Laserschneiden
- 321: erster Lichtstrahl
- 322: zweiter Lichtstrahl

## Patentansprüche

1. Verfahren zum Laserschneiden eines Werkstücks (12),
wobei insbesondere eine Vorrichtung (10; 100, 200; 300) zum Laserschneiden mit einem Schneidkopf (20) eingesetzt wird;
mit den Schritten
Bestrahlen einer Prozesszone (13) des Werkstücks mit einem Bearbeitungslaserstrahl (24), Schneiden des Werkstücks in einer Schneidrichtung (120) und Erzeugen eines Schnittspalts (121);
Bestrahlen der Prozesszone (13) mit einem kohärenten Beleuchtungslichtstrahl (32), insbesondere mit einem Beleuchtungslaserstrahl; und
Detektieren mindestens eines Teils des Beleuchtungslichtstrahls (32), der von der Prozesszone reflektiert wird;
- der Beleuchtungslichtstrahl (32) in einen ersten Lichtstrahl (321) und einen zweiten Lichtstrahl (322) geteilt wird;
- der erste Lichtstrahl (321) auf die Prozesszone geleitet wird;
- der zweite Lichtstrahl (322) auf einen Referenzspiegel (37) geleitet wird;
**dadurch gekennzeichnet, dass**
- eine Strahlungsintensität einer Überlagerung mindestens eines Teils des von der Prozesszone reflektierten ersten Lichtstrahls (321) und mindestens eines Teils des vom Referenzspiegel reflektierten zweiten Lichtstrahls (322) erfasst wird, und
- eine Mehrzahl von Wegstrecken (52), die der reflektierte erste Lichtstrahl von der Prozesszone zurücklegt, anhand der erfassten Strahlungsintensität ermittelt wird;
wobei die Mehrzahl von Wegstrecken (52), die der reflektierte erste Lichtstrahl (321) von der Prozesszone zurücklegt, durch Minimieren von Phasenverschiebungen zwischen dem von der Prozesszone reflektierten ersten Lichtstrahl (321) und dem vom Referenzspiegel reflektierten zweiten Lichtstrahl (322) ermittelt wird; und
mit der ermittelten Mehrzahl von Wegstrecken, die der reflektierte erste Lichtstrahl von der Prozesszone zurücklegt, Tiefen-Informationen über die Prozesszone erhalten werden.

2. Verfahren nach Anspruch 1,
wobei beim Ermitteln der Mehrzahl von Wegstrecken (52) der Referenzspiegel (37) parallel zur Ausbreitungsrichtung des zweiten Lichtstrahls (322) verschoben wird und/oder die zentrale Wellenlänge des Beleuchtungslichtstrahls (32) verändert wird, um maximale konstruktive Interferenzen des von der Prozesszone reflektierten ersten Lichtstrahls (321) und des vom Referenzspiegel reflektierten zweiten Lichtstrahls (322) einzustellen; und/oder
wobei beim Detektieren mindestens ein Element ausgewählt aus einer Querschnittsdarstellung der drei-dimensionalen Prozesszone (13), insbesondere des Schnittspalts (121), und eine dreidimensionale Abbildung der Prozesszone (13), insbesondere des Schnittspalts (121), erhalten wird.

3. Verfahren nach einem der vorstehenden Ansprüche,
wobei der Bearbeitungslaserstrahl (24) und der erste Lichtstrahl (321) mit einer Abweichung von 0° bis 2° koaxial auf die Prozesszone (13) geleitet werden; und/oder wobei beim Detektieren zumindest ein Teil des von der Prozesszone reflektierten ersten Lichtstrahls (321) erfasst wird, der koaxial zu dem auf die Prozesszone auftreffenden ersten Lichtstrahl (321) verläuft.

4. Verfahren nach einem der vorstehenden Ansprüche;
wobei der erste Lichtstrahl (321) unabhängig von dem Bearbeitungslaserstrahl (24) in die Vorrichtung (10; 100, 200; 300) zum Laserschneiden und/oder in den Schneidkopf (20) geleitet wird.

5. Verfahren nach einem der vorstehenden Ansprüche,
wobei der auf die Prozesszone (13) geleitete erste Lichtstrahl (321) hochfrequent, insbesondere mit einer Frequenz von 500 Hz bis 100 kHz senkrecht zu seiner Ausbreitungsrichtung bewegt wird; und/oder
wobei der Bearbeitungslaserstrahl (24) hochfrequent, insbesondere mit einer Frequenz von 500 Hz bis 100 kHz, insbesondere strahlformend, senkrecht zu seiner Ausbreitungsrichtung bewegt wird; und/oder
wobei der auf die Prozesszone geleitete erste Lichtstrahl (321) unabhängig von dem Bearbeitungslaserstrahl (24) bewegt wird; und/oder
wobei der Bearbeitungslaserstrahl (24) und der auf die Prozesszone geleitete erste Lichtstrahl (321) synchron und/oder einander zumindest teilweise räumlich überlagernd bewegt werden.

6. Verfahren nach einem der vorstehenden Ansprüche,
wobei der auf die Prozesszone geleitete erste Lichtstrahl (321) hochfrequent mit einer Frequenz von 500 Hz bis 100 kHz parallel und/oder senkrecht zur Schneidrichtung (120) bewegt wird; und/oder
wobei mindestens ein Element ausgewählt aus dem auf die Prozesszone geleiteten ersten Lichtstrahl (321) und/oder dem Bearbeitungslaserstrahl (24) durch Reflektion und/oder Umlenken an mindestens einer, mit mindestens einem Aktuator hochfrequent bewegten, reflektierenden Oberfläche (102; 28) bewegt werden.

7. Verfahren nach einem der vorstehenden Ansprüche,
wobei der Beleuchtungslichtstrahl (32) mit einer Kohärenzlänge zwischen 5 und 100 µm erzeugt wird.

8. Vorrichtung (10; 100; 200; 300) zum Laserschneiden eines Werkstücks (12) und zum Erzeugen eines Schnittspalts (121);
mit
- einem Schneidkopf (20), der eine erste Schnittstelle (22) für eine Laserquelle zum Erzeugen eines Bearbeitungslaserstrahls (24), eine zweite Schnittstelle (30) zum Einleiten zumindest eines Teils eines kohärenten Beleuchtungslichtstrahls (32) , der von einer Beleuchtungslichtquelle (33) erzeugt wird, und eine Austrittsöffnung (21) für den Bearbeitungslaserstrahl und den Beleuchtungslichtstrahl aufweist;
- einer Detektoreinrichtung (40) zum Detektieren zumindest eines Teils des von einer Prozesszone des Werkstücks durch die Austrittsöffnung reflektierten Beleuchtungslichtstrahls; und
- einer Lichtstrahloptik (25, 26, 28) zum Leiten des Bearbeitungslaserstrahls (24) in Richtung der Austrittsöffnung (21) und zum Leiten zumindest eines Teils des von der Prozesszone (13) des Werkstücks durch die Austrittsöffnung reflektierten Beleuchtungslichtstrahls (32) zur Detektoreinrichtung (40) wobei- die Lichtstrahloptik (25, 26) einen Referenzspiegel (37) und eine Einrichtung (36) zum Teilen des Beleuchtungslichtstrahls in einen ersten Lichtstrahl (321) und einen zweiten Lichtstrahl (322), zum Leiten des ersten Lichtstrahls in Richtung der Austrittsöffnung (21), zum Leiten des zweiten Lichtstrahls auf den Referenzspiegel (37) und zum Leiten des vom Referenzspiegel reflektierten zweiten Lichtstrahls (322) zur Detektoreinrichtung (40) aufweist;
**dadurch gekennzeichnet, dass**
- die Detektoreinrichtung (40) einen Strahlungsintensitätssensor (41) zum Erfassen einer Strahlungsintensität des Beleuchtungslichts (32) aufweist;
- die Detektoreinrichtung (40) eine Einrichtung (42) zum Ermitteln einer Mehrzahl von Wegstrecken (52), die der reflektierte erste Lichtstrahl (321) von der Prozesszone zurücklegt, anhand einer erfassten Strahlungsintensität einer Überlagerung mindestens eines Teils des von der Prozesszone reflektierten ersten Lichtstrahls (321) und mindestens eines Teils des vom Referenzspiegel reflektierten zweiten Lichtstrahls (322) aufweist;
wobei die Einrichtung (42) zum Ermitteln einer Mehrzahl von Wegstrecken (52) ausgebildet ist, die Mehrzahl von Wegstrecken durch Minimieren von Phasenverschiebungen zwischen mindestens einem Teil des von der Prozesszone durch die Austrittsöffnung reflektierten ersten Lichtstrahls (321) und mindestens einem Teil des vom Referenzspiegel reflektierten zweiten Lichtstrahls (322) zu ermitteln; und die Detektoreinrichtung (40) und/oder eine Steuereinrichtung der Vorrichtung zum Laserschneiden ausgebildet ist, mit der Mehrzahl von Wegstrecken (52) erhaltene Tiefen-Informationen als eine Tiefen-Dimension der der Prozesszone (13) und des Schnittspalts (121) zu bestimmen.

9. Vorrichtung nach Anspruch 8,
wobei die Einrichtung (42) zum Ermitteln einer Mehrzahl von Wegstrecken (52) ausgebildet ist, den Referenzspiegel (37) parallel zur Ausbreitungsrichtung des zweiten Lichtstrahls (322) zu verschieben und/oder die zentrale Wellenlänge des Beleuchtungslichtstrahls (32) zu verändern, zum Einstellen von maximalen konstruktiven Interferenzen des von der Prozesszone reflektierten ersten Lichtstrahls (321) und des vom Referenzspiegel reflektierten zweiten Lichtstrahls (322); und/oder
wobei die Detektoreinrichtung (40) zum Erzeugen mindestens eines Elements ausgewählt aus einer Querschnittsdarstellung der drei-dimensionalen Prozesszone, insbesondere des Schnittspalts, und einer dreidimensionalen Abbildung der Prozesszone, insbesondere des Schnittspalts, ausgebildet ist.

10. Vorrichtung nach einem der Ansprüche 8 und 9,
wobei die Lichtstrahloptik (25, 26) zum koaxialen Leiten des Bearbeitungslaserstrahls und des ersten Lichtstrahls auf die Prozesszone mit einer Abweichung von 0° bis 2° ausgebildet ist; und/oder
wobei die Lichtstrahloptik (25, 26) ausgebildet ist, mindestens einen Teil des von der Prozesszone reflektierten ersten Lichtstrahls (321), der koaxial zu dem auf die Prozesszone auftreffenden ersten Lichtstrahl (321) verläuft, zur Detektoreinrichtung (40) zu leiten.

11. Vorrichtung nach einem der Ansprüche 8 bis 10,
wobei die Lichtstrahloptik (25, 26) ausgebildet ist, den ersten Lichtstrahl (321) unabhängig von dem Bearbeitungslaserstrahl (24) in die Vorrichtung (10; 100, 200; 300) zum Laserschneiden und/oder in den Schneidkopf (20) zu leiten.

12. Vorrichtung nach einem der Ansprüche 8 bis 11,
wobei die Lichtstrahloptik (25, 26) eine Einrichtung (102) zum hochfrequenten Bewegen des in Richtung der Austrittsöffnung geleiteten ersten Lichtstrahls senkrecht zu seiner Ausbreitungsrichtung, insbesondere mit einer Frequenz von mindestens von 500 Hz bis 100 kHz, aufweist; und/oder
wobei die Lichtstrahloptik (25, 26) eine Einrichtung (102; 28) zum hochfrequenten Bewegen des in Richtung der Austrittsöffnung geleiteten Bearbeitungslaserstrahls (24) senkrecht zu seiner Ausbreitungsrichtung, insbesondere mit einer Frequenz von mindestens von 500 Hz bis 100 kHz, aufweist.

13. Vorrichtung nach Anspruch 12,
wobei die Einrichtung (102) zum hochfrequenten Bewegen des in Richtung der Austrittsöffnung geleiteten ersten Lichtstrahls zum Bewegen des ersten Lichtstrahls unabhängig von dem Bearbeitungslaserstrahl (24) ausgebildet ist; oder
wobei die Einrichtung (102) zum hochfrequenten Bewegen des in Richtung der Austrittsöffnung geleiteten ersten Lichtstrahls zum hochfrequenten Bewegen des ersten Lichtstrahls (321) und des Bearbeitungslaserstrahls (24) ausgebildet ist.

14. Vorrichtung nach einem der Ansprüche 12 und 13,
wobei die Lichtstrahloptik (25, 26) mit der Einrichtung (102) zum hochfrequenten Bewegen des in Richtung der Austrittsöffnung geleiteten ersten Lichtstrahls (321) und/oder der Einrichtung (28) zum hochfrequenten Bewegen des in Richtung der Austrittsöffnung geleiteten Bearbeitungslaserstrahls (24) zum synchronen und/oder einander zumindest teilweise räumlich überlagernden Bewegen des Bearbeitungslaserstrahls (24) und des auf die Prozesszone geleiteten ersten Lichtstrahls (321) ausgebildet ist.

15. Vorrichtung nach einem der Ansprüche 12 bis 14,
wobei die Einrichtung (102) zum hochfrequenten Bewegen des ersten Lichtstrahls parallel und/oder senkrecht zu einer Schneidrichtung ausgebildet ist; und/oder
wobei die Einrichtung (102) zum hochfrequenten Bewegen mindestens einen Aktuator und mindestens eine, mit dem mindestens einen Aktuator hochfrequent bewegliche, reflektierende Oberfläche (102), insbesondere mindestens einen Spiegel, aufweist.

16. Vorrichtung nach einem der Ansprüche 8 bis 15,
wobei die Beleuchtungslichtquelle (33) zum Erzeugen des Beleuchtungslichtstrahls mit einer Kohärenzlänge zwischen 5 und 100 µm ausgebildet ist; und/oder
wobei an der ersten Schnittstelle eine Laserquelle zum Erzeugen eines Bearbeitungslaserstrahls mit einer Leistung von mindestens 1kW, mit einer zentralen Wellenlänge im Bereich von 1000 bis 1100 nm und mit einer Bandbreite von +/- 10 nm vorgesehen ist; und/oder
wobei an der zweiten Schnittstelle (30) und/oder an mindestens einer weiteren Schnittstelle des Schneidkopfs (20) mindestens ein Element ausgewählt aus einem Teil der Lichtstrahloptik (25, 26), insbesondere dem Referenzspiegel (37) und/oder einem Strahlteiler (36) zum Teilen des Beleuchtungslichtstrahls in einen ersten und einen zweiten Lichtstrahl, der Beleuchtungslichtquelle (33) zum Erzeugen eines kohärenten Beleuchtungslichtstrahls mit einer Wellenlänge im Bereich von 500 nm bis 1400 nm, insbesondere eines Beleuchtungslaserstrahls, und der Detektoreinrichtung (40) angebunden ist.

17. Computerprogrammprodukt, umfassend ein oder mehrere Programmmodule, die bewirken, dass die Vorrichtung nach einem der Ansprüche 8 bis 16 Schritte des Verfahrens nach einem der Ansprüche1 bis 7 ausführt, insbesondere wenn die Programmmodule in einen Speicher der Vorrichtung geladen werden.

## Claims

1. A method of laser cutting a workpiece (12),
wherein in particular a device (10; 100, 200; 300) for laser cutting with a cutting head (20) is used;
comprising the following steps:
irradiating a process zone (13) of the workpiece with a processing laser beam (24), cutting the workpiece in a cutting direction (120) and producing a kerf (121);
irradiating the process zone (13) with a coherent illumination light beam (32), in particular with an illumination laser beam; and
detecting at least a portion of the illumination light beam (32), which is reflected from the process zone;
- wherein the illumination light beam (32) is split into a first light beam (321) and a second light beam (322);
- wherein the first light beam (321) is directed onto the process zone;
- wherein the second light beam (322) is directed onto a reference mirror (37);
**characterised in that**
- a radiation intensity of a superposition of at least a portion of the first light beam (321) reflected from the process zone and at least a portion of the second light beam (322) reflected from the reference mirror is acquired, and
- a plurality of distances (52) travelled by the reflected first light beam from the process zone is determined based on the acquired radiation intensity;
wherein the plurality of distances (52) travelled by the reflected first light beam (321) from the process zone is determined by minimising phase shifts between the first light beam (321) reflected from the process zone and the second light beam (322) reflected from the reference mirror; and
wherein depth information about the process zone is obtained using the determined plurality of distances travelled by the reflected first light beam from the process zone.

2. The method according to claim 1,
wherein, when determining the plurality of distances (52), the reference mirror (37) is shifted parallel to the direction of propagation of the second light beam (322) and/or the central wavelength of the illumination light beam (32) is changed in order to set maximum constructive interferences of the first light beam (321) reflected from the process zone and the second light beam (322) reflected from the reference mirror; and/or
wherein at least one element selected from a cross-sectional representation of the three-dimensional process zone (13), in particular of the kerf (121), and a three-dimensional image of the process zone (13), in particular of the kerf (121), is obtained during detection.

3. The method according to any one of the preceding claims,
wherein the processing laser beam (24) and the first light beam (321) are directed coaxially onto the process zone (13) with a deviation of 0° to 2°; and/or
wherein at least a portion of the first light beam (321) reflected from the process zone is acquired during detection, which extends coaxially to the first light beam (321) impinging on the process zone.

4. The method according to any one of the preceding claims;
wherein the first light beam (321) is directed into the device (10; 100, 200; 300) for laser cutting and/or into the cutting head (20) independently of the processing laser beam (24).

5. The method according to any one of the preceding claims,
wherein the first light beam (321) directed onto the process zone (13) is moved at high frequency, in particular at a frequency of 500 Hz to 100 kHz, perpendicular to its direction of propagation; and/or
wherein the processing laser beam (24) is moved at high frequency, in particular at a frequency of 500 Hz to 100 kHz, in particular in a beam-shaping manner, perpendicular to its direction of propagation; and/or
wherein the first light beam (321) directed onto the process zone is moved independently of the processing laser beam (24); and/or
wherein the processing laser beam (24) and the first light beam (321) directed onto the process zone are moved synchronously and/or in a manner at least partially spatially superimposed on one another.

6. The method according to any one of the preceding claims,
wherein the first light beam (321) directed onto the process zone is moved at high frequency with a frequency of 500 Hz to 100 kHz in parallel and/or perpendicular to the cutting direction (120); and/or
wherein at least one element selected from the first light beam (321) directed onto the process zone and/or the processing laser beam (24) is moved by reflection and/or deflection at at least one reflective surface (102; 28) moved at high frequency by at least one actuator.

7. The method according to any one of the preceding claims,
wherein the illumination light beam (32) is generated with a coherence length between 5 and 100 µm.

8. A device (10; 100; 200; 300) for laser cutting a workpiece (12) and for producing a kerf (121);
having
- a cutting head (20), which has a first interface (22) for a laser source for generating a processing laser beam (24), a second interface (30) for introducing at least a portion of a coherent illumination light beam (32) generated by an illumination light source (33), and an exit aperture (21) for the processing laser beam and the illumination light beam;
- a detector means (40) for detecting at least a portion of the illumination light beam reflected from a process zone of the workpiece through the exit aperture; and
- a light beam optics (25, 26, 28) for directing the processing laser beam (24) towards the exit aperture (21) and for directing at least a portion of the illumination light beam (32) reflected from the process zone (13) of the workpiece through the exit aperture to the detector means (40), wherein the light beam optics (25, 26) has a reference mirror (37) and a means (36) for splitting the illumination light beam into a first light beam (321) and a second light beam (322), for directing the first light beam towards the exit aperture (21), for directing the second light beam onto the reference mirror (37) and for directing the second light beam (322) reflected from the reference mirror to the detector means (40);
**characterised in that**
- the detector means (40) has a radiation intensity sensor (41) for acquiring a radiation intensity of the illumination light (32);
- the detector means (40) has a means (42) for determining a plurality of distances (52) travelled by the reflected first light beam (321) from the process zone based on an acquired radiation intensity of a superposition of at least a portion of the first light beam (321) reflected from the process zone and at least a portion of the second light beam (322) reflected from the reference mirror;
wherein the means (42) for determining a plurality of distances (52) is designed to determine the plurality of distances by minimising phase shifts between at least a portion of the first light beam (321) reflected from the process zone through the exit aperture and at least a portion of the second light beam (322) reflected from the reference mirror; and the detector means (40) and/or a control means of the device for laser cutting is designed to determine depth information obtained using the plurality of distances (52) as a depth dimension of the process zone (13) and the kerf (121).

9. The device according to claim 8,
wherein the means (42) for determining a plurality of distances (52) is designed to shift the reference mirror (37) parallel to the direction of propagation of the second light beam (322) and/or to change the central wavelength of the illumination light beam (32), for setting maximum constructive interferences of the first light beam (321) reflected from the process zone and the second light beam (322) reflected from the reference mirror; and/or
wherein the detector means (40) is designed to generate at least one element selected from a cross-sectional representation of the three-dimensional process zone, in particular of the kerf, and a three-dimensional image of the process zone, in particular of the kerf.

10. The device according to any one of claims 8 and 9,
wherein the light beam optics (25, 26) is designed to coaxially direct the processing laser beam and the first light beam onto the process zone with a deviation of 0° to 2°; and/or
wherein the light beam optics (25, 26) is designed to direct at least a portion of the first light beam (321) reflected from the process zone, which extends coaxially to the first light beam (321) impinging on the process zone, to the detector means (40).

11. The device according to any one of claims 8 to 10,
wherein the light beam optics (25, 26) is designed to direct the first light beam (321) into the device (10; 100, 200; 300) for laser cutting and/or into the cutting head (20), independently of the processing laser beam (24).

12. The device according to any one of claims 8 to 11,
wherein the light beam optics (25, 26) has a means (102) for moving the first light beam directed towards the exit aperture at high frequency perpendicular to its direction of propagation, in particular at a frequency of at least 500 Hz to 100 kHz; and/or
wherein the light beam optics (25, 26) has a means (102; 28) for moving the processing laser beam (24) directed towards the exit aperture at high frequency perpendicular to its direction of propagation, in particular at a frequency of at least 500 Hz to 100 kHz.

13. The device according to claim 12,
wherein the means (102) for moving the first light beam directed towards the exit aperture at high frequency is designed to move the first light beam independently of the processing laser beam (24); or
wherein the means (102) for moving the first light beam directed towards the exit aperture at high frequency is designed to move the first light beam (321) and the processing laser beam (24) at high frequency.

14. The device according to any one of claims 12 and 13,
wherein the light beam optics (25, 26) is formed with the means (102) for moving the first light beam (321) directed towards the exit aperture at high frequency and/or the means (28) for moving the processing laser beam (24) directed towards the exit aperture at high frequency for a synchronous and/or at least partially spatially superimposed movement of the processing laser beam (24) and the first light beam (321) directed onto the process zone.

15. The device according to any one of claims 12 to 14,
wherein the means (102) for moving the first light beam at high frequency is formed in parallel and/or perpendicular to a cutting direction; and/or
wherein the means (102) for moving at high frequency has at least one actuator and at least one reflective surface (102), in particular at least one mirror, which can be moved at high frequency by the at least one actuator.

16. The device according to any one of claims 8 to 15,
wherein the illumination light source (33) is designed to generate the illumination light beam with a coherence length between 5 and 100 µm; and/or
wherein a laser source for generating a processing laser beam with a power of at least 1 kW, with a central wavelength in the range of 1000 to 1100 nm and with a bandwidth of +/- 10 nm is provided at the first interface; and/or
wherein at least one element selected from a part of the light beam optics (25, 26), in particular the reference mirror (37) and/or a beam splitter (36) for splitting the illumination light beam into a first and a second light beam, the illumination light source (33) for generating a coherent illumination light beam with a wavelength in the range of 500 nm to 1400 nm, in particular an illumination laser beam, and the detector means (40) are connected to the second interface (30) and/or to at least one further interface of the cutting head (20).

17. A computer program product comprising one or more program modules, which cause the device according to any one of claims 8 to 16 to carry out the method steps according to any one of claims 1 to 7, in particular when the program modules are loaded into a memory of the device.

## Revendications

1. Procédé de découpage laser d'une pièce (12),
dans lequel en particulier un dispositif (10 ; 100, 200 ; 300) de découpage laser muni d'une tête de coupe (20) est utilisé ;
comprenant les étapes consistant à :
exposer une zone de traitement (13) de la pièce à un faisceau laser de traitement (24),
couper la pièce dans une direction de coupe (120) et générer une fente de coupe (121) ;
exposer la zone de traitement (13) à un faisceau lumineux d'éclairage (32) cohérent, en particulier à un faisceau laser d'éclairage ; et
détecter au moins une partie du faisceau lumineux d'éclairage (32) qui est réfléchi par la zone de traitement ;
- le faisceau lumineux d'éclairage (32) est divisé en un premier faisceau lumineux (321) et en un second faisceau lumineux (322) ;
- le premier faisceau lumineux (321) est dirigé sur la zone de traitement ;
- le second faisceau lumineux (322) est dirigé sur un miroir de référence (37) ;
**caractérisé en ce que**
- une intensité de rayonnement d'une superposition d'au moins une partie du premier faisceau lumineux (321) réfléchi par la zone de traitement et d'au moins une partie du second faisceau lumineux (322) réfléchi par le miroir de référence est détectée, et
- une pluralité de distances (52) parcourues par le premier faisceau lumineux réfléchi par la zone de traitement est déterminée en fonction de l'intensité de rayonnement détectée ;
la pluralité de distances (52) parcourues par le premier faisceau lumineux (321) réfléchi par la zone de traitement étant déterminée en réduisant au minimum les déphasages entre le premier faisceau lumineux (321) réfléchi par la zone de traitement et le second faisceau lumineux (322) réfléchi par le miroir de référence ; et
au moyen de la pluralité déterminée de distances parcourues par le premier faisceau lumineux réfléchi par la zone de traitement, des informations de profondeur concernant la zone de traitement peuvent être obtenues.

2. Procédé selon la revendication 1,
dans lequel lors de la détermination de la pluralité de distances (52), le miroir de référence (37) est décalé parallèlement à la direction de propagation du second faisceau lumineux (322) et/ou la longueur d'onde centrale du faisceau lumineux d'éclairage (32) est modifiée afin d'ajuster les interférences constructives maximales du premier faisceau lumineux (321) réfléchi par la zone de traitement et le second faisceau lumineux (322) réfléchi par le miroir de référence ; et/ou
dans lequel lors de la détection au moins un élément est sélectionné parmi une représentation en coupe de la zone de traitement tridimensionnelle (13), en particulier de la fente de coupe (121), et une image tridimensionnelle de la zone de traitement (13), en particulier de la fente de coupe (121) est obtenue.

3. Procédé selon l'une quelconque des revendications précédentes,
dans lequel le faisceau laser de traitement (24) et le premier faisceau lumineux (321) sont dirigés coaxialement sur la zone de traitement (13) avec un écart de 0° à 2° ; et/ou
lors de la détection, au moins une partie du premier faisceau lumineux (321) réfléchi par la zone de traitement est détectée, qui s'étend coaxialement au premier faisceau lumineux (321) frappant la zone de traitement.

4. Procédé selon l'une quelconque des revendications précédentes,
dans lequel le premier faisceau lumineux (321) est dirigé vers le dispositif (10 ; 100, 200 ; 300) de découpage laser et/ou vers la tête de découpe (20) indépendamment du faisceau laser de traitement (24).

5. Procédé selon l'une quelconque des revendications précédentes,
dans lequel le premier faisceau lumineux (321) dirigé sur la zone de traitement (13) est déplacé à haute fréquence, en particulier à une fréquence de 500 Hz à 100 kHz, perpendiculairement à sa direction de propagation ; et/ou
dans lequel le faisceau laser de traitement (24) est déplacé à haute fréquence, en particulier à une fréquence de 500 Hz à 100 kHz, en particulier de manière à former le faisceau, perpendiculairement à sa direction de propagation ; et/ou
dans lequel le premier faisceau lumineux (321) dirigé sur la zone de traitement est déplacé indépendamment du faisceau laser de traitement (24) ; et/ou
dans lequel le faisceau laser de traitement (24) et le premier faisceau lumineux (321) dirigé sur la zone de traitement sont déplacés de manière synchrone et/ou au moins partiellement superposés spatialement l'un sur l'autre.

6. Procédé selon l'une quelconque des revendications précédentes,
dans lequel le premier faisceau lumineux (321) dirigé sur la zone de traitement est déplacé à haute fréquence à une fréquence de 500 Hz à 100 kHz parallèlement et/ou
perpendiculairement à la direction de coupe (120) ; et/ou
dans lequel au moins un élément sélectionné parmi le premier faisceau lumineux (321) dirigé sur la zone de traitement et/ou le faisceau laser de traitement (24) est déplacé par réflexion et/ou déviation sur au moins une surface réfléchissante (102 ; 28) déplacée à haute fréquence au moyen d'au moins un actionneur.

7. Procédé selon l'une quelconque des revendications précédentes,
dans lequel le faisceau lumineux d'éclairage (32) est généré avec une longueur de cohérence comprise entre 5 et 100 µm.

8. Dispositif (10 ; 100 ; 200 ; 300) de découpage laser d'une pièce (12) et pour la génération d'une fente de coupe (121) ;
comprenant
- une tête de coupe (20) qui comporte une première interface (22) pour une source laser pour générer un faisceau laser de traitement (24), une seconde interface (30) pour introduire au moins une partie d'un faisceau lumineux d'éclairage (32) cohérent qui est généré par une source de lumière d'éclairage (33), et une ouverture de sortie (21) pour le faisceau laser de traitement et le faisceau de lumière d'éclairage ;
- un appareil détecteur (40) pour détecter au moins une partie du faisceau lumineux d'éclairage réfléchi par une zone de traitement de la pièce à travers l'ouverture de sortie ; et
- une optique de faisceau lumineux (25, 26, 28) pour diriger le faisceau laser de traitement (24) en direction de l'ouverture de sortie (21) et pour diriger au moins une partie du faisceau lumineux d'éclairage (32) réfléchi par la zone de traitement (13) de la pièce à travers l'ouverture de sortie vers l'appareil détecteur (40), dans lequel - l'optique de faisceau lumineux (25, 26) comporte un miroir de référence (37) et un appareil (36) pour diviser le faisceau lumineux d'éclairage en un premier faisceau lumineux (321) et en un second faisceau lumineux (322), pour diriger le premier faisceau lumineux en direction de l'ouverture de sortie (21), pour diriger le second faisceau lumineux sur le miroir de référence (37) et pour diriger le second faisceau lumineux (322) réfléchi par le miroir de référence vers l'appareil détecteur (40) ;
**caractérisé en ce que**
- l'appareil détecteur (40) comporte un capteur d'intensité de rayonnement (41) pour détecter une intensité de rayonnement de la lumière d'éclairage (32) ;
- l'appareil détecteur (40) comporte un appareil (42) pour déterminer une pluralité de distances (52) parcourues par le premier faisceau lumineux réfléchi (321) depuis la zone de traitement, en fonction d'une intensité de rayonnement détectée d'une superposition d'au moins une partie du premier faisceau lumineux (321) réfléchi par la zone de traitement et au moins une partie du second faisceau lumineux (322) réfléchi par le miroir de référence ;
dans lequel l'appareil (42) est conçu pour déterminer une pluralité de distances (52), la pluralité de distances en réduisant au minimum les déphasages entre au moins une partie du premier faisceau lumineux (321) réfléchi par la zone de traitement à travers l'ouverture de sortie et au moins une partie du second faisceau lumineux (322) réfléchi par le miroir de référence ; et l'appareil détecteur (40) et/ou un appareil de commande du dispositif de découpage laser est/sont conçu(s) pour déterminer des informations de profondeur obtenues avec la pluralité de distances (52) en tant que dimension de profondeur de la zone de traitement (13) et de la fente de coupe (121).

9. Dispositif selon la revendication 8,
dans lequel l'appareil (42) est conçu pour déterminer une pluralité de distances (52), pour décaler le miroir de référence (37) parallèlement à la direction de propagation du second faisceau lumineux (322) et/ou pour modifier la longueur d'onde centrale du faisceau lumineux d'éclairage (32), pour ajuster les interférences constructives maximales du premier faisceau lumineux (321) réfléchi par la zone de traitement et du second faisceau lumineux (322) réfléchi par le miroir de référence ; et/ou
dans lequel l'appareil détecteur (40) est conçu pour générer au moins un élément sélectionné parmi une représentation en coupe de la zone de traitement tridimensionnelle, en particulier de la fente de coupe, et une image tridimensionnelle de la zone de traitement, en particulier de la fente de coupe.

10. Dispositif selon l'une quelconque des revendications 8 et 9,
dans lequel l'optique de faisceau lumineux (25, 26) est conçue pour diriger coaxialement le faisceau laser de traitement et le premier faisceau lumineux sur la zone de traitement avec un écart de 0° à 2° ; et/ou
dans lequel l'optique de faisceau lumineux (25, 26) est conçue pour diriger au moins une partie du premier faisceau lumineux (321) réfléchi par la zone de traitement, qui s'étend coaxialement au premier faisceau lumineux (321) frappant la zone de traitement, vers l'appareil détecteur (40).

11. Dispositif selon l'une quelconque des revendications 8 à 10,
dans lequel l'optique de faisceau lumineux (25, 26) est conçue pour diriger le premier faisceau lumineux (321) indépendamment du faisceau laser de traitement (24) dans le dispositif (10 ; 100, 200 ; 300) de découpage laser et/ou dans la tête de coupe (20).

12. Dispositif selon l'une quelconque des revendications 8 à 11,
dans lequel l'optique de faisceau lumineux (25, 26) comporte un appareil (102) pour déplacer à haute fréquence le premier faisceau lumineux dirigé en direction de l'ouverture de sortie perpendiculairement à sa direction de propagation, en particulier à une fréquence d'au moins 500 Hz à 100 kHz ; et/ou
dans lequel l'optique du faisceau lumineux (25, 26) comporte un appareil (102 ; 28) pour déplacer à haute fréquence le faisceau laser de traitement (24) dirigé en direction de l'ouverture de sortie perpendiculairement à sa direction de propagation, en particulier à une fréquence d'au moins 500 Hz à 100 kHz.

13. Dispositif selon la revendication 12,
dans lequel l'appareil (102) de déplacement à haute fréquence du premier faisceau lumineux dirigé en direction de l'ouverture de sortie est conçu pour déplacer le premier faisceau lumineux indépendamment du faisceau laser de traitement (24) ; ou
dans lequel l'appareil (102) de déplacement à haute fréquence du premier faisceau lumineux dirigé en direction de l'ouverture de sortie est conçu pour déplacer à haute fréquence le premier faisceau lumineux (321) et le faisceau laser de traitement (24).

14. Dispositif selon l'une quelconque des revendications 12 et 13,
dans lequel l'optique de faisceau lumineux (25, 26) équipée de l'appareil (102) de déplacement à haute fréquence du premier faisceau lumineux (321) dirigé en direction de l'ouverture de sortie et/ou de l'appareil (28) de déplacement à haute fréquence du faisceau laser de traitement (24) dirigé en direction de l'ouverture de sortie, est conçue pour déplacer de manière synchrone et/ou au moins partiellement de manière superposée spatialement le faisceau laser de traitement (24) et le premier faisceau lumineux (321) dirigé sur la zone de traitement.

15. Dispositif selon l'une quelconque des revendications 12 à 14,
dans lequel l'appareil (102) est conçu pour déplacer à haute fréquence le premier faisceau lumineux parallèlement et/ou perpendiculairement à une direction de coupe ; et/ou
dans lequel l'appareil (102) de déplacement à haute fréquence comporte au moins un actionneur et au moins une surface réfléchissante (102), qui peut être déplacée à haute fréquence au moyen de l'au moins un actionneur, en particulier au moins un miroir.

16. Dispositif selon l'une quelconque des revendications 8 à 15,
dans lequel la source de lumière d'éclairage (33) est conçue pour générer le faisceau de lumière d'éclairage avec une longueur de cohérence comprise entre 5 et 100 µm ; et/ou
dans lequel une source laser est prévue au niveau de la première interface pour générer un faisceau laser de traitement d'une puissance d'au moins 1 kW, à une longueur d'onde centrale dans la plage de 1 000 à 1 100 nm et avec une bande passante de +/- 10 nm ; et/ou
dans lequel à la seconde interface (30) et/ou au moins à une autre interface de la tête de coupe (20), est relié au moins un élément sélectionné parmi une partie de l'optique de faisceau lumineux (25, 26), en particulier le miroir de référence (37) et/ou un séparateur de faisceau (36) pour diviser le faisceau lumineux d'éclairage en un premier et en un second faisceau lumineux, la source de lumière d'éclairage (33) étant destinée à générer un faisceau lumineux d'éclairage cohérent à une longueur d'onde dans la plage de 500 nm à 1 400 nm, en particulier un faisceau laser d'éclairage, et l'appareil détecteur (40).

17. Produit programme d'ordinateur comprenant un ou plusieurs modules de programme qui amènent le dispositif selon l'une quelconque des revendications 8 à 16 à exécuter des étapes du procédé selon l'une quelconque des revendications 1 à 7, en particulier lorsque les modules de programme sont chargés dans une mémoire du dispositif.
